(19) Europäisches Patentamt
European Patent Office
Office européen des brevets

(11) **EP 4 761 033 A1**

(12) **EUROPEAN PATENT APPLICATION**

(43) Date of publication:
**17.06.2026 Bulletin 2026/25**

(21) Application number: **24219969.3**

(22) Date of filing: **13.12.2024**

(51) International Patent Classification (IPC):
*H02J 3/28* (2026.01)   *H02J 3/46* (2026.01)

(52) Cooperative Patent Classification (CPC):
**H02J 3/28; H02J 3/466;** H02J 2103/35

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **eMIS Management GmbH
20251 Hamburg (DE)**

(72) Inventors:
• **HÄGELE, Leonard
10625 Berlin (DE)**

• **ALEINIKAU, Pavel
10551 Berlin (DE)**
• **PÖSSEL, Till
10589 Berlin (DE)**
• **BASLER, Gerrit
13351 Berlin (DE)**
• **CARRASCO, Miguel
12053 Berlin (DE)**

(74) Representative: **Laqua, Bernd Christian Kurt
Wuesthoff & Wuesthoff
Patentanwälte und Rechtsanwalt PartG mbB
Schweigerstraße 2
81541 München (DE)**

(54) **CONTROL OF ELECTRICAL ENERGY RESOURCES**

(57)    A computer-implemented method (150) for controlling the distribution of electrical energy to a set of technical units, computer-implemented method (100) for obtaining an operational envelope of electrical energy provision relating to at least one set of technical units, TU, and associated apparatuses (180, 190), systems (10a, 10b), and computer program elements.

Fig. 1

EP 4 761 033 A1

## Description

### Technical Field

The present specification relates to a computer-implemented method for obtaining an operational envelope of electrical energy provision relating to at least one set of technical units, a computer-implemented method for controlling the distribution of electrical energy within a set of technical units, and associated apparatuses, systems, computer program elements, and a computer readable medium.

### Background

Electrification is the trend towards integration of electrically powered consumers into the electricity grid that places new demands on the power grid and grid operators. Typically, such consumers can be monitored via a communication connection to the grid operator, for example.

Electrical energy networks are fragmented. Considerable amounts of electrical energy storage are available in electrical energy networks but this capacity is not properly utilised because it is difficult to combine these isolated segments of electrical energy storage at timescales that are useful in the context of modern electrical energy networks.

Accordingly, electrical energy distribution and the availability of electrical energy storage can be further improved.

### Summary

According to a first aspect, there is provided computer-implemented method for obtaining an operational envelope of electrical energy provision relating to at least one set of technical units. The method comprises:

obtaining (i) a charging schedule characterizing a plurality of charging opportunities of the technical unit, (ii) a maximum power time series defining a capability of each technical unit to charge, and (iii) a minimum power time series defining a capability of each technical unit to discharge;

for each technical unit, computing (iv) a minimum energy time series characterizing a minimum energy requirement of the respective technical unit over time, wherein the minimum energy time series is computed by applying a first charging power from a first predetermined time of the respective charging opportunity beginning with a final charging opportunity of the charging schedule and proceeding backwards in the charging schedule to a first charging opportunity;

for each technical unit, computing (v) a maximum energy time series characterizing an upper energy limit of the respective technical unit over time, wherein the maximum energy time series is computed by applying a second charging power from a second predetermined time of the respective charging opportunity beginning with the first charging opportunity of the charging schedule and proceeding forwards in the charging schedule;

for each technical unit, computing (vi) a minimum energy change time series characterising a change of the minimum energy time series resulting from the charging schedule, and computing (vii) a maximum energy change time series characterising a change of the maximum energy time series resulting from the charging schedule, wherein the time series (ii) to (vii) define an operational envelope of a respective technical unit;

computing an operational envelope for the set of technical units by summing, for all technical units in the set of technical units, each type of time series with corresponding time series of the same type, wherein the operational envelope characterises the energy level within the set of technical units as a function of time;

outputting the operational envelope of the set of technical units.

A TU can take energy from an energy network, or push energy into an energy network at a desired time.

Calculating the flexibility of a large plurality of TUs during aggregation or deaggregation is a complex process that needs to take several steps into account. For example, the maximum and minimum power of a TU should be determined. The available time window in which energy consumption can be controlled should be considered. Existing operating restrictions such as minimum operating times, start-up times, production requirements or targets need to be considered. Aggregation of a large number of TUs needs to take into account correlations and restrictions within a set of TUs.

Advantageous technical effects are discussed in the following. By using an operational envelope for each TU according to the present specification, the limits and requirements of one or more technical units as an energy consumer and/or an energy producer are efficiently encoded and can be efficiently manipulated.

All technical units are supplied with the energy and charged as required, whilst leaving excess capacity available for energy allocation operations at arbitrary hierarchical levels of the system of technical units.

The operational envelope at TU level enables the capacity of many individual TUs to be described by one operational envelope. Furthermore, the operational envelopes of each TU can be recursively combined or decombined an arbitrary number of times. In other words, a first operational envelope describing a first set of TUs can be combined with a second operational envelope describing a second set of TUs. A first operational envelope can be transparently aggregated with a second operational envelope. This property enables the recursive introduction of different aggregation levels in a system of technical units, energy suppliers, energy allocation mechanisms and an energy grid. This property of the operational envelopes enables the pooling of a large number of technical units, and the calculation of an operational envelope defining the pool of technical units as a forecast.

The highest level of aggregation of operational envelopes may correspond to a balancing group. The operational envelope corresponding to a balancing group may be interpreted as a virtual battery, summarising the energy storage capacity of a large and optionally geographically distributed network of technical units. The operational envelope of the balancing group enables integration of a large and potentially geographically distributed group of technical units into an energy allocation mechanism. Accordingly, a balancing group manager can use the operational envelope to generate charging and discharging strategies for a large number of technical units, for example. Using the operational envelope to balance energy usage within the balancing group leads to improved energy use within the balancing group leading to a reduced need of balancing energy.

Deaggregation with operational envelopes corresponding to underlying TUs allows the automatic generation of data commands specifying at least charging or discharging of lower level technical units in a manner that is matched to the capabilities of each technical unit and can fulfil an aggregated target power schedule if one is specified by the energy allocation mechanism. Technical limitations of individual technical units can be complied with.

The operational envelope of each TU allows deaggregation to be performed quickly so that an electrical energy system can react directly to short-term grid limitation commands issued on a timescale of between one second and 15 minutes. This prevents shutdowns of renewable energy plants by allowing the technical units of a system to absorb or consume power when there is a surplus in an electrical grid.

Accordingly, the concept of the operational envelope both at TU, and system level, enables the provision of a feedback loop between the technical units and the balancing group, in which aggregation is performed and an improved power schedule is designed at balancing group level. The improved power schedule defined by the operational envelope at balancing group level is capable of deaggregation, to enable a generation of control commands for charging and/or discharging, or otherwise controlling, individual technical units. The power schedule, deaggregated according to operational envelopes of a set of TUs, therefore enables a virtual control circuit to be established which represents a distributed physical flow of energy between a plurality of technical units constituting the virtual battery.

Advantageously, aggregation using the operational envelope enables an energy allocation mechanism to improve or optimise the aggregate energy storage or usage capacity in a flexible manner. An energy allocation mechanism can address the virtual battery in the same manner as a single battery. The dynamic limits of the virtual battery ensure that the intended original use of individual technical units is not restricted. For example, the participation of an electric vehicle in energy allocation operations (such as for frequency containment reserve operations) still enables the electric vehicle to be used for its intended purpose of driving. Existing or upcoming computational approaches for allocation of energy in an energy grid can be used to optimise a virtual battery to match multiple user needs.

According to a second aspect, there is provided a computer-implemented method for controlling the distribution of electrical energy to a set of technical units, the method comprising:

    obtaining an aggregated target power schedule, defining a target power output for a set of technical units;
    obtaining an operational envelope for each technical unit of the set of technical units;
    computing, for each technical unit of the set of technical units, a minimum power schedule using the corresponding operational envelope of each technical unit, based on a rule that charging of each technical unit occurs when a predicted state of charge of a technical unit reaches a predetermined state of charge of the respective technical unit;
    aggregating the minimum power schedule of each technical unit of the set of technical units to form an aggregated minimum power schedule;
    determining using the aggregated target power schedule and the aggregated minimum power schedule, a delta schedule per technical unit, wherein the delta schedule characterises a power surplus or power shortfall for each technical unit of the set of technical units;
    computing a distribution of the power represented by the delta schedule amongst the set of technical units as a load schedule of each technical unit wherein computing the distribution comprises:
    for each technical unit in the set of technical units:

        allocating a first portion of power represented by the delta schedule to each technical unit in the set of technical units;
        aggregating each of the energy and power corridors comprised in operational envelopes of the remaining technical units in the set of technical units to which no allocation from the delta schedule has been made;

verifying that an unallocated power delta, represented by a second portion of the delta schedule can be distributed to the remaining technical units; and

if the power represented by the second portion of the delta schedule can be distributed to the remaining technical units:

designating the minimum power schedule and the first portion of the delta schedule as a load schedule to each technical unit, and

controlling at least one technical unit of the set of technical units according to the corresponding load schedule for each technical unit.

According to a third aspect, there is provided an apparatus for obtaining an operational envelope of electrical energy provision relating to at least one set of technical units. The apparatus comprises a communications interface, a memory, and a processor.

The communications interface is configured to obtain (i) a charging schedule characterizing a plurality of charging opportunities of the technical unit, (ii) a maximum power time series defining a capability of each technical unit to charge, and (iii) a minimum power time series defining a capability of each technical unit to discharge.

The processor is configured to compute, for each technical unit, (iv) a minimum energy time series characterizing a minimum energy requirement of the respective technical unit over time, wherein the minimum energy time series is computed by applying a first charging power from a first predetermined time of the respective charging opportunity beginning with a final charging opportunity of the charging schedule and proceeding backwards in the charging schedule to a first charging opportunity.

The processor is configured to compute, for each technical unit, (v) a maximum energy time series characterizing an upper energy limit of the respective technical unit over time, wherein the maximum energy time series is computed by applying a second charging power from a second predetermined time of the respective charging opportunity beginning with the first charging opportunity of the charging schedule and proceeding forwards in the charging schedule.

The processor is configured to compute, for each technical unit, (vi) a minimum energy change time series, characterising a change of the minimum energy time series resulting from the charging schedule, and to compute (vii) a maximum energy change time series characterising a change of the maximum energy time series resulting from the charging schedule, wherein the time series (ii) to (vii) define an operational envelope of a respective technical unit.

The processor is configured to compute an operational envelope for the set of technical units by summing, for all technical units in the set of technical units, each type of time series with corresponding time series of the same type, wherein the operational envelope characterises the energy level within the set of technical units as a function of time.

The communications interface is configured to output the operational envelope of the set of technical units.

According to a fourth aspect, there is provided an apparatus for controlling the distribution of electrical energy within a set of technical units, wherein the apparatus comprises a communications interface, a memory, and a processor.

The communications interface is configured to obtain an aggregated target power schedule defining a target power output for a set of technical units and an operational envelope for each technical unit of the set of technical units.

The processor is configured to compute, for each technical unit of the set of technical units, a minimum power schedule, using the corresponding operational envelope of each technical unit, based on a rule that charging of each technical unit occurs when a predicted state of charge of a technical unit reaches a predetermined state of charge of the respective technical unit.

The processor is configured to compute an aggregation of the minimum power schedule of each technical unit of the set of technical units to form an aggregated minimum power schedule.

The processor is configured to determine, using the aggregated target power schedule and the aggregated minimum power schedule, a delta schedule, per technical unit, wherein the delta schedule characterises a power surplus or power shortfall for each technical unit of the set of technical units.

The processor is configured to compute a distribution of the power represented by the delta schedule amongst the set of technical units as a load schedule of each technical unit wherein computing the distribution comprises:
for each technical unit in the set of technical units:

allocating a first portion of power represented by the delta schedule, to each technical unit, in the set of technical units;
aggregating each of the energy, and power corridors comprised in operational envelopes of the remaining technical units in the set of technical units to which no allocation from the delta schedule, has been made;
verifying that an unallocated power delta, represented by a second portion of the delta schedule can be distributed to the remaining technical units; and
if the power represented by the second portion of the delta schedule can be distributed to the remaining technical units:
designating the minimum power schedule and the first portion of the delta schedule, as a load schedule, to each technical unit.

The processor is configured to generate at least one control command for controlling at least one technical unit of the set of technical units according to the corresponding load schedule, for each technical unit.

According to a fifth aspect, there is provided a system for controlling the distribution of electrical energy within a set of technical units. The system comprises an electrical energy distribution grid communicably coupled to a grid controller, at least one set of technical units electrically connectable to the electrical energy distribution grid, and a first apparatus for controlling the distribution of electrical energy within a set of technical units according to the third aspect, wherein the first apparatus is communicably coupled to the at least one set of technical units and the grid controller, and/or a second apparatus for obtaining an operational envelope of electrical energy provision relating to at least one set of technical units according to the fourth aspect, wherein the second apparatus is communicably coupled to the first apparatus and/or the grid controller.

According to a sixth aspect, there is provided a computer program element comprising machine readable instructions which, when executed, cause a computer to execute the methods according to the first and/or second aspects discussed herein, or their dependent embodiments.

According to a seventh aspect, there is provided a non-transitory computer readable medium comprising the machine readable instructions according to the sixth aspect.

According to an eighth aspect, there is provided a method for operating an electrical energy supply system comprising performing the method according to the first aspect, and performing the method according to the second aspect.

In the following description, a "technical unit, TU" refers to an electrical device or system whose energy consumption can be specifically controlled and adjusted either by a command from a control apparatus connected to the RU via a to a communications network, or according to a decision of the TU made within bounds defined by the control apparatus. An alternative designation for a TU is as a "controllable consumption unit", CCU. The control of one or more TUs enables efficient use of energy, particularly at times of high or low energy demand, and can help to stabilise the power grid. A TU can be controlled via a centralised control system. Remote control ability enables energy suppliers or grid operators to increase or decrease the consumption of the TU at will. With this control, TUs can be flexibly adapted to a current energy situation experienced in an energy grid. For example, one or more TUs can be switched off when demand is high or production is low (in the case of a solar energy system). TUs are often integrated into smart grid systems that automatically adjust energy consumption in real-time. Such automation improves energy efficiency and enables a dynamic response to grid conditions, thus controlling peak loads. Such automation can be provided from either the energy generation site or from the consumer side.

A TU may be one, or any combination, of an electrical vehicle (EV), a charger infrastructure for an electrical vehicle (LIS), household appliances integrated into smart systems such as washing machines, dryers, dishwashers, heating systems, cooling systems, and controllable industrial plant, besides many other types of controllable appliances.

A TU is configured such that its energy consumption can be controlled flexibly at different times. In examples, a TU may comprise a storage unit such as a battery. This enables a time shift between receiving energy at the grid connection point and supplying energy to the consumer. According to an example, regenerative or bidirectional vehicles enable the feed-in of energy stored in a battery of the vehicle back into a domestic grid, or even the upstream grid. In the case of an electric vehicle, a storage unit is characterised by its electrical capacity, the maximum charging and discharging power, and the current state of charge.

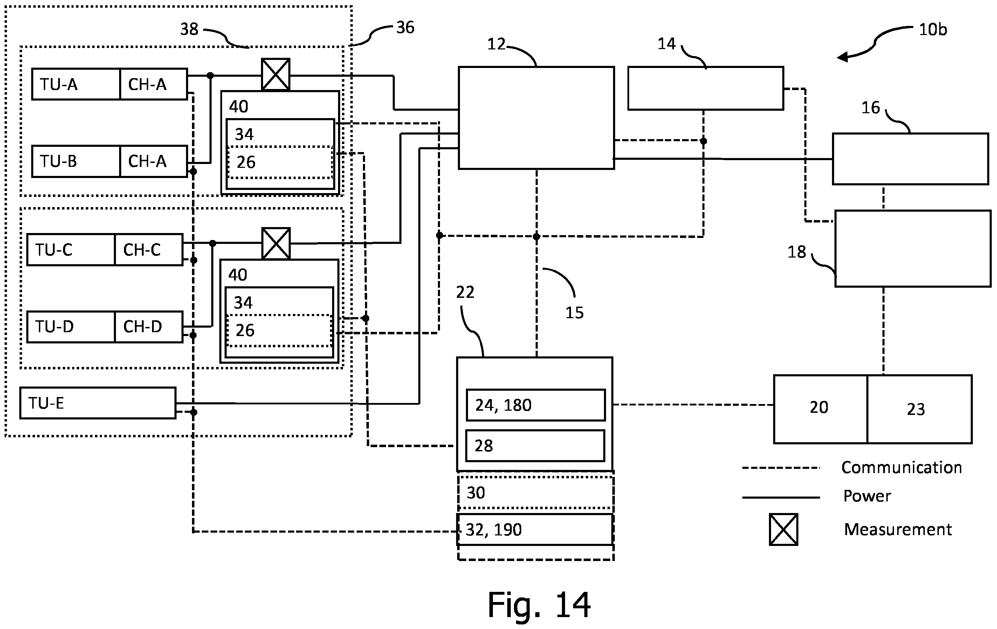

In some examples, a TU is connected to a grid operator via a programmable logic controller 40. This programmable logic controller 40 may be installed at each grid connection point of a TU. The programmable logic controller 40 enables a grid operator to throttle back feed-in of a TU controlled by the programmable logic controller 40 in the event of a limitation imposed by the grid operator. **Fig. 14** illustrates such an architecture.

In techniques discussed in this specification, to use may be aggregated so that the control of a large number of TUs (5, 10, 50, 100, 150, 200, etc.) can be achieved. A plurality of individual TUs can be bundled into a larger unit by a logical controller. A variety of implementations of the logical controller exist. For example, the logical controller may be hosted by a cloud application to which each TU is communicably coupled. In another embodiment, a server at the location of one or more of the TUs implements the logical controller. The logical controller may be provided as a virtualised application across one, or more, of the TUs, a local server, or a cloud application.

The aggregated TUs can be programmed to act as one energy source, or consumer, when connected to the energy grid, similar to a large consumer or producer. In examples, aggregators manage TUs and allow them to participate in energy supply operations. In examples, individual TUs do not have to be physically connected to each other, and can be logically associated even though no direct electrical connection is present between the TUs.

In the previous paragraphs, a TU has been considered to be a physical entity "physical TU", to which energy can be allocated, or from which energy can be supplied. For the purposes of this specification, a TU can also be a "logical entity" which has no directly corresponding physical embodiment, but may be a combination of other physical TUs and/or logical TUs. As one example, a controller such as a computer can maintain a database record referring to a set of electrical vehicles, such as a bus. Each vehicle of the set of electrical vehicles is a physical TU. The controller may designate the set of electrical vehicles to be a logical TU. The same operational metrics and operational envelopes can be computed for a physical TU and for a logical TU.

Accordingly, the operational envelopes of TUs can be aggregated into a plurality of hierarchical layers regardless of whether or not the computations refer to a physical TU and for a logical TU. In other words, once a number of operational envelopes of physical TUs have been computed, these operational envelopes can be combined or bundled into one logical TU that can be analysed and manipulated by higher-level data processors.

According to an embodiment, the higher-level data processor does not require knowledge of the type or control specifications of the physical TUs that have been bundled into the one logical TU. According to another embodiment, the higher-level data processor may have knowledge of a type of one or more TUs at a lower aggregation level. The operational envelope defined by the logical TU allows the energy allocation operations discussed in this specification.

An operational envelope, which can alternatively be referred to as an operating boundary, operating region, operating specification, or similar, comprises a set of time series defining an energy corridor, a power corridor, and an energy Delta corridor for a corresponding target of the operational envelope. A TU, whether physical or logical, may be defined by an operational envelope. According to an embodiment, an operational envelope of a TU may be provided by the manufacturer. According to an embodiment, an operational envelope of a TU may be computed in real-time by either the corresponding TU, and/or a remote controller.

An aggregator can use a series of control commands to issue controls to TUs to control energy consumption according to the flexibility of each TU. The control commands can vary dependent on the type of consumer and the objective which is being pursued (such as load shifting, reduction of peak loads, or utilisation of surplus power). Typical communication control commands that can be issued by aggregators to one or more TUs are to switch the TU on or off, to perform load adjustment of the TU to reduce or increase energy consumption, the control power of the TU through target power specification, or to shift load through time restrictions. A skilled person will be able to consider many other control commands that an aggregator can send to a TU. A mathematical explanation of aggregation is provided subsequently in this specification.

A deaggregator obtains the operational envelopes of all lower level TUs and generates commands for operating or controlling the lower level TUs. The process of deaggregation is done in a manner that is matched to the capabilities of each technical unit of the lower level defined by operational envelopes of respective TUs. In case an aggregated target power schedule is specified at the higher aggregated level, the sum of all control commands issued to TUs of a lower level match the target power with a best effort strategy, for example. Therefore, technical limitations or availability limitations of individual technical units can be complied with.

Controlling a TU may include, for example, controlling the charging or discharging of one or more batteries comprised in the TU. Controlling a TU may include switching on, or off, one or more residual loads of the TU. Controlling a TU may include scheduling the charging or discharging of batteries, of the status of residual loads, at a future time. Controlling a TU may comprise transmitting a power corridor that a respective TU can use to control its own charging, discharging, or energy use.

The phrase "real-time" relative to the control of energy management systems in the context of this specification means that, for example, a TU can respond (by storing energy or releasing energy to the grid, for example) to a grid command within one second, five seconds, 10 seconds, 30 seconds, one minute, five minutes, 10 minutes, or 15 minutes.

A balancing group is defined over a plurality of technical units TUs as a virtual account in which all feedings and withdrawals of energy within a predetermined time period are recorded. Typically, the predetermined time period is a 15 minute slot. Participants in energy allocation operations register power supply or withdrawal operations in the balancing groups. Energy producers and TUs feed-in and withdraw energy from the balancing group, and such flows are also recorded with reference to the balancing group. A balancing group manager is responsible for ensuring that energy flows within the balancing group are balanced.

A deviation in the balance between power generation and power consumption leads to fluctuations in the grid frequency. These fluctuations destabilise the grid, and in extreme cases can lead to load shedding (such as the targeted shutdown of consumers) or even large-scale power outages. The grid operators are responsible for the physical stability of the grid and monitor compliance with the balancing groups in their role. Forecasting inaccuracies may result in deviations on the part of producers and consumers, therefore grid operators use balancing energy. This is retained by energy producers in order to be able to supply or withdraw additional energy from the power grid in real time according to the grid frequency deviation, and counteract the grid fluctuation. Grid operators obtain balancing energy from an energy allocation mechanism.

**Brief Description of the Figures**

Further details and advantages of the technique presented herein will be described with reference to exemplary implementations illustrated in the figures, in which:

**Fig. 1**   schematically illustrates a system according to an exemplary aspect.

**Fig. 2**   schematically illustrates an example of a technical unit.

**Fig. 3**   schematically illustrates an example of an operational envelope.

**Fig. 4**   schematically illustrates a functional block diagram according to an example.

**Fig. 5**   schematically illustrates a computer implemented method according to the first aspect.

**Fig. 6**   schematically illustrates a backpropagation routine used for obtaining the minimum energy time series.

**Fig. 7**   schematically illustrates an example of an aggregation/deaggregation hierarchy.

**Fig. 8**   schematically illustrates a further example of an operational envelope.

**Fig. 9**   schematically illustrates an example of optimizing energy allocation to a lower aggregation level during deaggregation.

**Fig. 10**   schematically illustrates a computer implemented method according to the second aspect.

**Fig. 11**   schematically illustrates an exemplary method of deaggregation.

**Fig. 12**   schematically illustrates computation of a desired power level.

**Fig. 13**   schematically illustrates handling of power margins for FCR.

**Fig. 14**   schematically illustrates an alternative system for bidirectional energy transfer.

**Fig. 15**   schematically illustrates an aggregation apparatus.

**Fig. 16**   schematically illustrates a deaggregation apparatus.

**Fig. 17**   schematically illustrates power and energy corridors of two vehicles and a corresponding state of charge estimate.

**Fig. 18**   schematically illustrates a deaggregation of the aggregated operational envelope of two electric vehicles.

## Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

Technical units TUs that function as controllable consumption devices such as electrical vehicles and their charging infrastructure are integrated into a wider energy grid. Regulation of the energy grid was previously performed by energy suppliers. With the increasing tendency for TUs to be controllable by external entities, such TUs can now also play a role in short-term energy storage and grid management.

Existing energy management solutions do not take into account the time-coupled integration of producers and consumers at balancing group level. This means that there is no clear temporal link between green power generation and green power use, for example. According to existing solutions, green power is often generated according to an annual balance, rather than a real-time balance.

The flexibility of energy allocation mechanisms is not fully utilised by existing energy management systems. Energy forecasts for the following day can be used for energy allocation or optimisation. In the case of some examples, TUs such as electrical vehicles may be disconnected and reconnected to an energy grid tens of times a day. Owing to the frequent disconnection and reconnection of electrical vehicles to the energy grid, electrical vehicles are difficult to integrate into energy allocation mechanisms on a real time basis.

If energy optimisations are performed, they are frequently performed at the level of individual TUs or at most at a local aggregation level. Therefore, no direct connection can currently be made to renewable energy generation in a balancing group, for example.

According to the present specification, an approach for dynamic energy and flexibility management based on gradual aggregation and deaggregation is provided.

Dynamic means that the approach operates in real time, or near real-time, and can therefore react directly to changes in renewable energy generation, an energy allocation mechanism, or the power grid. The approach can also react to short-term changes on the consumer side.

According to techniques outlined in this specification, it is possible to perform the improvement or optimisation of target power flows for individual TUs (such as controllable consumption units, CCUs) at balancing group level. Through a Deaggregation process, the optimised balancing group level can be deaggregated into control signals or control commands for controlling the electrical performance of individual TUs. In other words, by controlling the electrical performance of a plurality of TUs at such a granular level, aggregated values at the level of the balancing group (or similar higher level of aggregation) are achieved.

Accordingly, the approach realises a physical power flow from individual TUs (controllable consumption units) which is improved or optimised at balancing group level, or similarly high level of aggregation.

According to this specification, a hierarchy-level agnostic metric for the definition of electrical performance is introduced. An operational envelope can be computed either for one TU, an arbitrary set of TUs at one hierarchical level, for an arbitrary set of TUs at a plurality of hierarchical levels, up to a top hierarchical level (which may be considered to be a balancing group).

For example, an operational envelope comprises a set of time series defining an energy corridor, a power corridor, and an energy Delta corridor for a corresponding target of the operational envelope.

Advantages of using an operational envelope to describe TU capabilities is that technical limitations and temporary restrictions of the TU can be characterised and adjusted in real-time. Energy requirements of respective TU can be encoded such that higher hierarchical layers of an aggregation scheme can respect minimum energy requirements. For example, a minimum state of charge of a storage unit comprised in a TU can be encoded to ensure that energy required for the safe operation of that TU cannot wrongly be hypothecated to another participant in an energy allocation scheme. The operational envelope according to the specification also enables real-time flexibility when charging and discharging a corresponding TU.

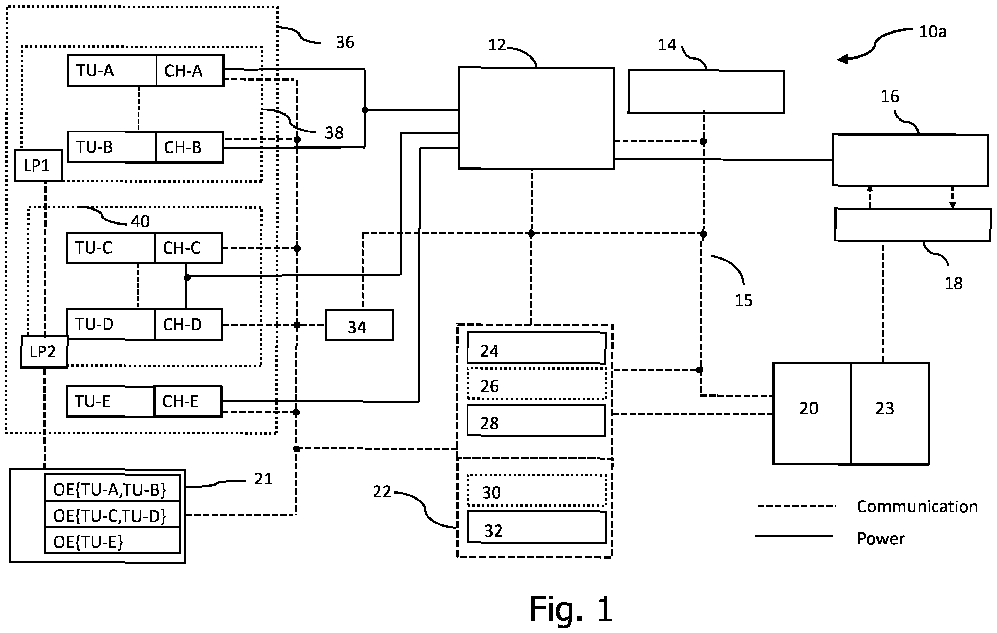

**Fig. 1** schematically illustrates a system according to an exemplary aspect.

The system 10a, 10b for controlling the distribution of electrical energy within a set of technical units TU comprises an electrical energy distribution grid 12 communicably coupled to a grid controller 14, at least one set of technical units TU electrically connected to the electrical energy distribution grid, and a first apparatus 32, 190 for controlling the distribution of electrical energy within a set of technical units according a second aspect.

The first apparatus 32, 190 is communicably coupled to the at least one set of technical units TU. The grid controller 14, and/or a second apparatus 28, 180 for obtaining an operational envelope of electrical energy provision relating to at least one set of technical units TU according to the first aspect. The second apparatus 28,180 is communicably coupled to the first apparatus 32,190 and/or the grid controller (14).

In general, the system 10a, 10b manages electrical energy allocation between a controlled energy source 16, and a plurality of technical units TU-A, TU-B, [...].

The electrical grid 12 is configured to distribute electrical energy from a controlled energy source 16 to one or more technical units TU-A, TU-B, [...]. In some embodiments, the electrical grid 12 may also distribute electrical energy from the one or more technical units to any other of the one or more technical units. The electrical grid 12 may be a nationally regulated energy grid comprising transmission lines, and a plurality of step-up and step-down transformers to provide electrical energy to plurality of technical units according to administratively fixed specifications for voltage, current, and frequency.

The grid controller 14 is typically a nationally regulated service for monitoring and electrical distribution grid to ensure that administratively fixed specifications for voltage, current, and frequency are obeyed, and to provide services such as load balancing, load shedding, and communication with electrical distribution grid participants.

A controlled energy source 16 functions to provide electrical energy to the electrical grid 12 for distribution to energy users coupled to the energy grid 12. The amount of energy and the time at which energy is supplied to the grid from the controlled energy source 16 may be coordinated by the grid controller 14, for example.

The controlled energy source 16 may, for example, comprise one or more of a conventional fixed power station such as a coal power plant, gas power plant, nuclear power plant, hydropower station, and the like. The controlled energy source 16 may, for example, comprise a renewable energy source such as a wind farm, or a solar power plant.

The controlled energy source 16 is operatively coupled to a power supply operator 18. The power supply operator 18 may be a governmental or commercial power station operator capable of responding to requests for greater or lower energy supply to the electrical grid 12 by the grid controller 14.

The system 10a, 10b further comprises a plurality of technical units TU-A, TUB, [...]. As discussed elsewhere in this specification, technical unit may comprise one, or any combination, of consumption unit, storage unit, and/or a generation unit.

A consumption unit receives electrical energy from the electrical grid 12 and dissipates it in the form of work and heat within the technical unit TU.

A storage unit receives electrical energy from the electrical grid 12 and stores the electrical energy in, for example, a battery. At a future point in time, the storage unit may dissipate the electrical energy in the form of work and heat by powering a consumption unit of the technical unit. Alternatively, the storage unit may feed the electrical energy back into the electrical grid 12 the source of electrical energy.

A generation unit receives no electrical energy from electrical grid 12, but may feed electrical energy generated within the TU into the electrical grid 12 by converting another form of energy accessible to the technical unit TU into electrical energy. For example, the generation unit may be a solar array.

According to an example, the system 10a, 10b comprises an energy allocation mechanism 20. The function of the electrical energy allocation mechanism 20 is to receive reports of surplus electrical energy from around the grid 12, and to allocate the surplus electrical energy to the benefit of electrical energy grid participants, such as technical units TUs. For example, the electrical energy allocation mechanism 20 may be implemented by a machine learning engine, conventional rule-based engine, or via other means such as energy allocation policies.

A plurality of technical units TU-A, TU-B, [...] may be grouped together or located in the same geographical location. A plurality of technical units TU-A, TU-B, [...] may be distributed across various geographical locations, but may be logically connected.

In the system of **Fig. 1,** technical units TU-A, TU-B form a first logical group. Technical units TU-C, TU-D form a second logical group. Technical unit TU-E may be considered to form a logical group with technical units TU-A, TU-B and technical units TU-C, TU-D.

The technical units TU-A, TU-B, TU-C, TU-D and TU-E are each connected to the electrical grid 12 so they can be supplied with electrical energy, and so that they can supply electrical energy to the electrical grid 12. These technical units are also communicably coupled to control system 22.

Optionally, the technical units TU-A, TU-B, TU-C, TU-D are connected to the electrical grid 12 via corresponding battery chargers CH-A, CH-B, CH-C, CH-D.

At this point, it is remarked that the entities of the system 10a, 10b described previously function with no coordination between the technical units TU-A, TU-B, TU-C, TU-D and TU-E. In the course of normal operation of the technical units TU-A, TUB, TU-C, TU-D and TU-E, these technical units will draw electrical energy supplied by the controlled energy source 16 via the electrical grid 12 according to the individual demand of each technical unit. Monitoring by the grid controller 14 and/or the power supply operator 18 may be performed to change the power output of the controlled energy source 16 to compensate for energy used by the technical units TU-A, TU-B, TU-C, TU-D and TU-E.

According to an example, control system 22 can be considered to be a general purpose computer. The control system 22 hosts a status monitor 24, an aggregator 28, and a deaggregator 32. In another example, the aggregator 28, and the deaggregator 32 can be hosted on separate control systems.

The hosting of the status monitor 24, aggregator 28, and deaggregator 32 on the same control system 22 is a nonlimiting example, and each of these modules can also be provided on separate data processors. According to a variation, an aggregator 180 and a deaggregator 190 are provided on separate general-purpose computers or processors.

According to an example, the aggregator 28 functions to logically combine the technical units TU-A, TU-B, TU-C, TU-D and TU-E so that they are presented to the electrical grid 12 as a unified electrical energy consumer and/or electrical energy supplier. Furthermore, the aggregator 28 may enable the technical units TU-A, TU-B, TU-C, TU-D and TU-E to balance energy between each other so that the technical units TU-A, TU-B, TU-C, TU-D and TU-E can function normally even though they do not draw energy from the electrical grid 12.

Specific computations performed by the aggregator 28 to enable the aggregation of the technical units TU-A, TU-B, TU-C, TU-D and TU-E are discussed subsequently in this specification. In brief, the aggregator 28 may logically combine technical units TU-A, TU-B into a first logical technical unit 38. The aggregator 28 may also logically combine technical units TU-C, TU-D into a second logical technical unit.

The first and second logical technical units may be termed to be on a first hierarchical aggregation level. The aggregator 28 may also logically combine the first and second logical technical units with technical unit TU-E, thus forming a second hierarchical aggregation level. In the illustrated example, the second hierarchical aggregation level is also referred to as balancing group. A skilled person will appreciate that the example provided is arbitrary, and the technical units TU may be arranged is any hierarchy without departure from the teaching of this specification.

According to embodiments, the balancing group may function as a virtual battery (or alternatively as a virtual electrical energy sink). A virtual battery may supply electrical energy to other grid participants (not illustrated) via electrical grid 12. Furthermore, the electrical energy stored by a virtual battery (which is stored in the underlying technical units TU-A, TU-B, TU-C, TU-D and TU-E) can be offered to an energy allocation mechanism 22 enable efficient distribution around other participants in the electrical energy grid 12.

For example, either the grid controller 14, one or more power supply operators 18, and/or the energy allocation mechanism 20 may provide to control system 22 a specification or command for the supply and/or storage of energy at one or more time points to one or more grid participants, such as technical units TUs.

Upon receipt of such a command, the control system 22, via deaggregator 32, is configured to generate one or more control commands for respective technical units TU-A, TU-B, TU-C, TU-D and TU-E. The control commands may, for example, comprise instructions to feed electrical energy into the electrical grid 12 at predetermined time points, and/or to charge at predetermined time points, in order to respond to the command of the supply of energy from either the grid controller 14, the power supply operator 18, and/or the energy allocation mechanism 20. This is an example of a bidirectional system.

Alternatively, the control system 22 is not configured to feed electrical energy into the electrical grid 12, but may arrange for more effective electrical energy storage within the set of technical units TU-A, TU-B, TU-C, TU-D and TU-E. This is an example of a unidirectional system.

In each case, the deaggregation performed by deaggregator is computed according to the method of the second aspect of this specification so that each technical unit TU is capable of meeting its own power schedule, and also meeting externally imposed commitments from one or more of the grid controller 14, the power supply operator 18, and/or the energy allocation mechanism 20.

Computation of the deaggregation for a technical unit TU involves knowledge of the power schedule imposed by a higher aggregation level, and the operational envelope OE of each TU of at least one contiguously underlying aggregation level. Accordingly, database 21 or is configured to store operational envelopes OEs of one or more TUs in the system. In an example, database 21 is a sub-unit of deaggregator 32.

According to another example the OEs are computed and stored locally to TUs in local processors LP1, LP2. In this example, when deaggregator 32 requires one or more operational envelopes OE during a deaggregation operation, the deaggregator may poll one or more local processors LP1, LP2 to obtain the operational envelopes needed to complete the deaggregation.

According to an example, database 21 can equivalently be provided by a stateful form of information storage accessible via a cloud server, a web application, and the like.

The electrical energy needs of each technical unit of the set of technical units TU-A, TU-B, TU-C, TU-D and TU-E can be defined by a new metric discussed subsequently in the specification referred to as an operational envelope. The electrical needs, and excess capacity, of each technical unit are encoded as a function of time in the operational envelope for that technical unit. In addition, the operational envelope of the first technical unit can be combined with the operational envelope of a plurality of other technical units, enabling aggregation and deaggregation of technical units so that a plurality of technical units can function as, for example, a virtual battery.

One or more of the controller 22 or the aggregator 28 may be configured to communicate surplus electrical energy (encoded in the operational envelope) within the plurality of technical units TU to an electrical energy allocation mechanism 20.

In operation, as technical units TUs of the system 10a, 10b provide information about their availability schedules to the aggregator 28, the aggregator computes operational envelopes defining the ability of the TUs to store and/or provide power either between each other, and/or to the rest of the electrical grid 12. An energy allocation mechanism 20 may put a power demand on the technical units TUs. A deaggregator 32 is configured to meet, or to attempt to meet, this power demand by an iterative deaggregation of the power demand from the electrical grid 12 that uses the operational envelope OE of a respective technical unit.

At intermediate levels of the deaggregation hierarchy, commands to contiguously lower levels of the deaggregation hierarchy enable the power contribution of TUs in the next lowest aggregation level to be computed using the respective OEs in that next lowest aggregation level. At the lowest level of the deaggregation hierarchy, commands are generated that control the energy storage and/or consumption of one or more TUs.

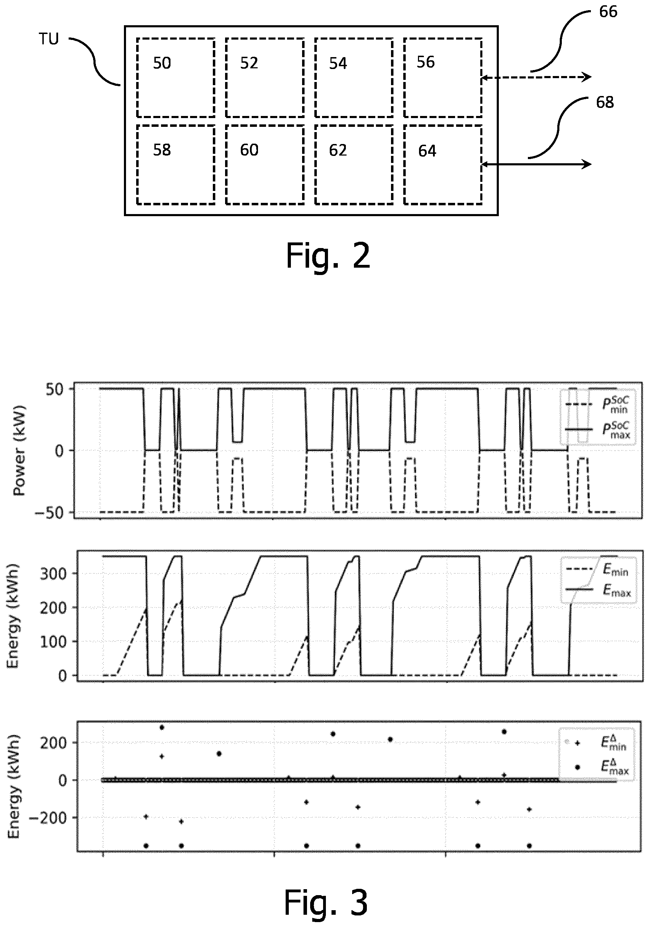

**Fig. 2** schematically illustrates an example of a technical unit.

Technical unit TU may optionally comprise any one of an electrical energy storage unit 50, a consumption unit 52, and/or a generator unit 54 as discussed previously. In addition, the technical unit TU may optionally comprise a communications interface 56 capable of communicably coupling the technical unit TU to one, or more, a data communications network 15. The data communications network 15 is communicably coupled to a plurality of other technical units TU in the system 10a, 10b, as well as the controller 22, a grid controller 14, a power supply operator 18, and the like. The communications network 15 may, for example, be a TCP/IP-based network. Alternatively, or in addition, the communications interface 56 may use specialised communication protocols for electrical energy management such as Open-ADR, and/or IEC 104.

The technical unit TU comprises an electrical energy interface 64. The electrical energy interface 64 is configured to receive electrical energy from the grid 12 at, for example, 230 volts AC and to convert electrical energy from the grid 12 so that it is suitable for the function of the technical unit TU. In bidirectional applications, the electrical energy interface 64 is also configured to feed electrical energy stored, for example, in an electrical energy storage unit 50 of the technical unit TU into the electrical grid 12.

The technical unit TU comprises a data processor and memory 58. In an example, the data processor and memory 58 may store schedule information relevant to the operation of the technical unit TU. For example, the schedule information may define when the technical unit is available and not available for feeding electrical energy into the grid 12. According to a further example, the data processor and memory 58 may comprise identification information enabling the technical unit 12 to communicate with the controller 22. The identification information may be analogous to an IP address or an asset identification number.

According to example, the data processor and memory 58 of the technical unit TU may be configured to generate, and/or store an operational envelope of the technical unit TU housing the data processor and memory 58, and to transmit the operational envelope to the controller 22 on demand. According to another example, the aggregator 28, 180 of the controller 22 generates operational envelopes for each technical unit TU.

The identification information enables the controller 22 to build a database of technical units TU, and their corresponding operational envelopes, identified via the communication network, that are connected to the electrical energy grid 12. With this information, the controller 22 can identify technical units capable of being aggregated.

The technical unit TU optionally comprises a status monitor 60. The status monitor is configured to monitor, for example, a state of charge of an electrical energy storage unit 50 such as a battery. The technical unit TU may be configured periodically to report the state of charge of the storage unit of the respective technical unit TU to, for example, a controller 22 for use in aggregation or de-aggregation computations.

The technical units TU optionally comprise a residual load 62. The residual load 62 may be a load that is not associated with providing energy to the electrical grid 12, but which must still be accounted for in aggregation or deaggregation computations.

The data processor and memory 58 of the technical unit TU may be further configured to receive deaggregation commands from, for example, deaggregator 32.

A deaggregation command received by a TU may comprise, for example, a time series or analogous command defining the magnitude and time at which a respective TU should feed electrical energy into an electrical energy grid 12 either by discharging its electrical energy storage unit 50, and/or operating its generator unit 54.

Alternatively, a deaggregation command received by a TU may comprise, for example, a time series or analogous command defining when and how the storage unit of the respective technical unit TU should be charged using electrical energy provided by the grid 12 by the electrical energy interface 64 of the TU. When a plurality of technical units TU synchronously perform their deaggregation commands, the plurality of technical units TU appear to the electrical grid 12, grid operator 14, and electrical energy allocation mechanism 20 as a unified virtual battery or sink.

The technical unit may be an electrical vehicle such as an electrical bus, electrical car, electrical scooter, electrical bicycle, electrical motorcycle, drone, or electrical aeroplane.

The technical unit may be a renewable energy system such as a solar energy system comprising a storage unit, a wind energy system comprising a storage unit, a heat pump, or industrial plant comprising a storage unit.

The technical unit may be a residential or industrial battery storage unit.

The aforementioned are examples of physical technical units that correspond to physical apparatuses. Logical technical units may be assembled as groups of any combination of the listed apparatuses. For example, two distinct pluralities of electrical vehicles may be combined as first and second logical technical units by a control system configured to register an identifier (such as a manufacturer specific identifier) of each electrical vehicle, and to logically group the first and second pluralities of electrical vehicles based on the identifier.

**Fig. 3** schematically illustrates an example of an operational envelope.

The operational envelope illustrated in **Fig. 3** comprises a power corridor, an energy corridor, and an energy Delta corridor of an electrical vehicle, such as a bus. Notably, the power state of charge of the vehicle drops to 0 kW on occasions when the electrical vehicle is away from a charging point at a depot. Correlated in time with the power corridor, the energy corridor illustrates how the electrical energy available for transmission to the electrical grid increases as the electrical vehicle is charged whilst waiting at the depot. An area in between the minimum and maximum energy curves can be hypothecated for provision to other technical units or grid users, optionally using the energy allocation mechanism 20. The energy underneath the minimum energy curve is required for the essential functionality of the vehicle itself.

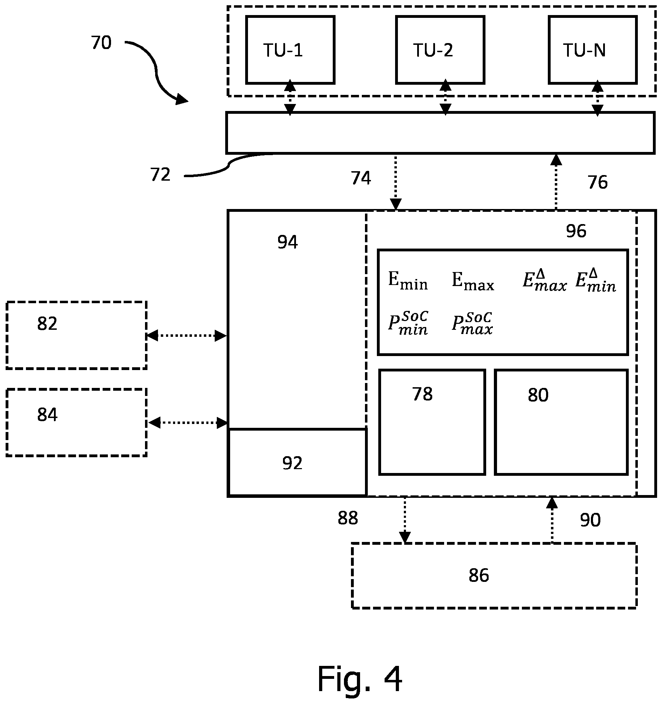

**Fig. 4** schematically illustrates a functional block diagram according to an example.

The functional block diagram demonstrates that processor 94 executes software instructions 92 stored in memory 96 according to a computer program element according to the sixth aspect which instantiate a logical environment 70. The processor 94 is optionally communicably coupled to a user interface 82 and/or a data store 84.

The processor 94 is optionally communicable coupled to an interface 86 (such as application programming interface, API) to an energy allocation mechanism 20. The processor 94 may publish energy resources of one or more of the plurality of technical units TU-1 to TU-N to the energy allocation mechanism 20. The processor 94 may receive one or more energy reservation commands from the energy allocation mechanism 20.

The processor 94 is communicably coupled to a communication interface 72 of a plurality of technical units TU-1 to TU-N. According to example, the communication interface 72 is configured to communicate with the technical units TU-1 to TU-N using the OpenADR and/or IEC 104 standards. The processor 94 may receive monitoring information from one or more of the plurality of technical units TU-1 to TU-N via the communication interface 72. The processor 94 may communicate instructions or commands 76 to one or more of the plurality of technical units TU-1 to TU-N via the communication interface 72.

According to one exemplary computation, the processor 94 may receive availability information of the plurality of technical units TU-1 to TU-N either from the data store 84, or from the technical units themselves. The processor 94 may receive power and energy monitoring time series from each of the plurality of technical units TU-1 to TU-N.

An aggregation module of the logical environment 70 executed by the processor 94 is configured to compute a plurality of operational envelopes corresponding to each of the plurality of technical units TU-1 to TU-N. Alternatively, the logical environment 70 executed on the processor 94 is configured to receive a plurality of operational envelopes from each of the plurality of technical units TU-1 to TU-N. The aggregation module 78 generates at least one further operational envelope of the plurality of technical units TU-1 to TU-N using the plurality of operational envelopes defining each of the plurality of technical units TU-1 to TU-N.

According to example, the processor 94 may be configured to determine surplus energy and capacity in the at least one further operational envelope. For example, the surplus energy corresponds to the energy which can be discharged from the TU, while the surplus capacity is similar to the energy that can be charged to the TU. The fact that the plurality of technical units comprise surplus energy is communicated (published) to the interface 86 of the energy allocation mechanism. At a predetermined future time, point, the processor 94 is configured to receive, from the interface 86 of the energy allocation mechanism, a reservation of energy defined by the at least one further operational envelope.

The deaggregation module 80 receives the reservation of energy received from the interface 86 to the energy allocation mechanism. The deaggregation module 80 is configured to distribute the surplus power defined by the at least one further operational envelope according to requirements of the reservation 90 received from the energy allocation mechanism. For example, the deaggregation module 80 outputs one or more data commands to one or more of the plurality of technical units TU-1 to TU-N. The one or more of the plurality of technical units TU-1 to TU-N implement the data commands and either output electrical energy to a grid 12, or store electrical energy in their internal storage units.

According to an embodiment, the data commands output by the deaggregation module 80 at a particular aggregation level comprise an identifier of a communications interface of a technical unit TU (for example, an IP address, MAC address and/or a custom identifier).

According to an embodiment, the data commands output by the deaggregation module 80 may further comprise instructions defining the beginning and end of one or more charging periods of a charger of a technical unit, and optionally one or more functions defining the power to be supplied to the TU whilst charging as a function of time.

According to an embodiment, instructions may comprise a time series or analogous command defining when and how the storage unit of the respective technical unit TU should be charged using electrical energy provided by the grid 12.

A skilled person will appreciate that the foregoing description of the operation of the logical environment 70 is one specific example, and many variations can be provided within the scope of the present specification.

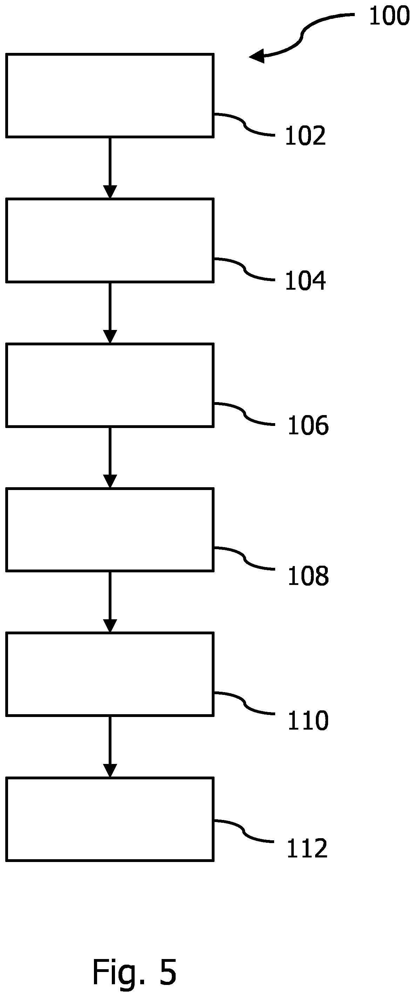

**Fig. 5** schematically illustrates a computer implemented method according to the first aspect.

In general terms, the aggregation computation can be described with regards to the following statement.

According to a first aspect, there is provided a computer-implemented method 100 for obtaining an operational envelope of electrical energy provision relating to at least one set of technical units, TU, the method comprising:

obtaining 102 (i) a charging schedule, $t_{start}^{CR}$, $t_{end}^{CR}$, characterizing a plurality of charging opportunities of the technical unit, (ii) a maximum power time series, $P_{max}(t)$, defining a capability of each technical unit to charge, and (iii) a minimum power time series, $P_{min}(t)$, defining a capability of each technical unit to discharge;

for each technical unit, computing 104 (iv) a minimum energy time series, $E_{min}(t)$, characterizing a minimum energy requirement of the respective technical unit over time, wherein the minimum energy time series, $E_{min}(t)$, is computed by applying a first charging power from a first predetermined time of the respective charging opportunity beginning with a final charging opportunity of the charging schedule and proceeding backwards in the charging schedule to a first charging opportunity;

for each technical unit, computing, 106, (v) a maximum energy time series, $E_{max}(t)$, characterizing an upper energy limit of the respective technical unit over time, wherein the maximum energy time series is computed by applying a second charging power from a second predetermined time of the respective charging opportunity beginning with the first charging opportunity of the charging schedule and proceeding forwards in the charging schedule;

for each technical unit, computing 108 (vi) a minimum energy change time series, $E_{\Delta min}(t)$, characterising a change of the minimum energy time series resulting from the charging schedule, and computing (vii) a maximum energy change time, $E_{\Delta max}(t)$ series characterising a change of the maximum energy time series resulting from the charging schedule, wherein the time series (ii) to (vii) define an operational envelope of a respective technical unit;

computing 110 an operational envelope for the set of technical units by summing, for all technical units in the set of technical units, each type of time series with corresponding time series of the same type, wherein the operational envelope characterises the energy level within the set of technical units as a function of time;

outputting 112 the operational envelope of the set of technical units.

This previous general definition of the aggregation computation, and specific embodiments combinable with this general definition, will now be discussed in more detail.

According to the first aspect, the calculation of the operational envelope for the management of one or more technical units TUs is now described. Firstly, the determination of an operational envelope for a single TU is described, followed by a discussion of how to aggregate operational envelopes for a plurality of TUs. The operational envelope is a metric for flexibly controllable consumers, generators, and batteries, for example.

For a TU that comprises a battery, the maximum charging capacity $P_{charge}$ and maximum discharge capacity $P_{discharge}$ as well as the storage capacity $C_{bat}$ of the battery are known. For example, the aforementioned properties may be stored in the TU so that the TU may communicate them to a processor 94 upon communicable connection of the respective TU via communication interface 72, for example. Furthermore, a processor 94 obtains planning data of the respective TU from, for example, data store 84. The planning data of the respective TU is in the form of one or more planned charging requests CR. A TU may be associated with a large number of consecutive CRs $n_{CR}$.

According to an embodiment, one CR describes a single charging phase of a TU. According to an embodiment, a CR is defined by an earliest possible start of a charging phase $t_1^{CR}$, a planned end of a charging phase $t_{end}^{CR}$, and an assumed minimum state of charge at the end of the charging phase $E_{min}^{SoC}(t_{end}^{CR})$.

The minimum state of charge at the end of the charging phase corresponds to the required energy for the operation/use of a TU and may be assumed, for example, based on the expected consumption of the TU, based on the experience with previous uses of the TU or even arbitrarily, if the operation of the TU can be guaranteed.

The minimum state of charge can, for example, correspond to the minimum energy required for an electric vehicle before departure to ensure its primary purpose. Another example could be the minimal energy requirement of a flexible heat pump until the planned end of a charging phase, to ensure a given minimal temperature to be ensured.

According to an embodiment, if one or more of the TUs are electrically powered vehicles, such as electric buses, the one or more CRs can be derived from a planned travel schedule of the electrically powered vehicle, such as from a public bus timetable or other operational plan of the electrically powered vehicle.

According to example, a task of the computer implemented method according to the first aspect is to generate an operational envelope of a set of technical units. For example, the set of technical units may be a plurality of electric buses returning to a bus depot. The operational envelope is characterised by a multidimensional set of time series. In an example, the time series may be referenced to timeslots of an energy trading system. For example, some energy trading systems define a slot as lasting 15 minutes, although skilled person will appreciate that a slot may be arbitrarily defined and last a shorter or longer period than this.

According to an example, considering an operational envelope intended to define a period of m days, of 15 minute slots, there will be 24 * 4 * m data points per time series representing delivery periods in the range $t_n = [t_0^{FL}, \ldots, t_{end}^{FL}]$.

In this example, each delivery period is a 15 minute timeslot.

The operational envelope of one technical unit TU over the duration of a slot is described by the following time series:

An upper energy limit $E_{max}(t_n)$ at the end of a slot, a lower energy limit $E_{min}(t_n)$ at the end of a slot, an upper power limit $P_{SoC,max}(t_n)$ of the technical unit for changing the state of charge of the technical unit TU, a lower power limit $P_{SoC,min}(t_n)$ of the technical unit for changing the state of charge of the technical unit TU by discharging, a change in the maximum energy curve $E_{max,delta}(t_n)$ at availability, or non-availability, of the technical unit TU, and a change in the minimum energy curve $E_{min,delta}(t_n)$ at availability, or non-availability, of the technical unit TU.

According to an example where the technical unit is an electrical vehicle such as an electric bus, availability represents the arrival of the electrical vehicle and its successful connection into an electrical charging grid. Non-availability represents the departure of the electrical vehicle and its successful disconnection from the electrical charging grid. Availability and non-availability can be predicted from the planned travel schedule of the electrical vehicle, although a skilled person will appreciate that the described computational approach is robust to unplanned variations from the planned travel schedule of the electrical vehicle.

The aforementioned set of six time series define the operational envelope of one technical unit TU in relation to its battery storage capacity. As seen, for example, from the system diagram of Fig. 2, a technical unit TU may also comprise an optional residual load 52. In the example of an electrically powered vehicle, the residual load 52 may be a heating element for heating the vehicle prior to a scheduled departure of the vehicle, or any other form of energy dissipation. The residual load is also a factor in the computation of the operational envelope of one technical unit TU. According to example, the operational envelope of at least one technical unit TU may also comprise powerful auxiliary consumers, preconditioning, and/or losses $P_{res}(t_n)$.

Determining the Power Corridor for a single TU:

According to an embodiment, one or more charging requests CR of a single TU are used to determine a power corridor for a predetermined length of time into the future within which the power of the TU is intended to be controlled.

For example, the nominal power corridor of the TU is described by the time series $P_{max}(t)$ and $P_{min}(t)$. According to an embodiment, a TU comprises only energy consuming units, and no storage or generative capability, such that $P_{min}(t_n) = 0 \ \forall \ t_n$.

A TU may be intermittently available. For example, a TU may be coupled to the electrical energy grid and/or a communication system at predetermined or unpredictably defined times. In this case, the power corridor of such an intermittently available TU falls to 0 (said to be "closed") during periods of unavailability. If a TU is an electric vehicle, a period of unavailability is a time when the electric vehicle is travelling. According to embodiment, a TU may be capable of communicating charge levels of its storage or battery to a processor configured to compute or update an operational envelope of that TU even if the TU is not electrically connected to an electrical grid, however in this case the power corridor of the TU is still considered to be closed. In other words, $P_{max}(t_{travel})=P_{min}(t_{travel}) = 0$.

According to an embodiment, the minimum power time series $P_{min}(t)$ may encode temporary power restrictions of the TU such as the maximum discharge power. Therefore, even if a TU is functionally collected to an electrical grid such that charging or discharging into the grid can occur, dynamic grid connection capacities or restrictions on the charging infrastructure may in practice limit the power corridor of the respective TU.

According to an embodiment, additional energy consumers within the TU that use a proportion of the charging power without charging the storage of that TU (and therefore not changing the state of charge of the TU) are described by the aforementioned optional time series of the TU's operational envelope $P_{res}(t)$.

According to an embodiment, in the case of an electric vehicle, an example of consumers contributing to $P_{res}(t)$ can be a least one of an air conditioning unit, heater, an in-vehicle infotainment or computer system, and the like. Accordingly, *Preset)* defines the behaviour of auxiliary consumers of a technical unit TU.

According to an embodiment, if residual power needs to be taken into account for the computation of the operational envelope of the TU, the available power $P_{max}(t)$ and $P_{min}(t)$ are divided between the time series defining charging/discharging the battery, and magnitude of the residual power. This results in an effective power corridor between $P_{SoC,max}(t), P_{Soc,min}(t)$ of the TU. The effective power corridor between $P_{Soc,max}(t), P_{SoC,min}(t)$, in other words, defines the effective power $P_{SoC}(t)$ available for changing the energy level of the TU. The effective power corridor describes the effective power limits of the TU, taking into account plannable (or communicated) restrictions and non-availability.

Turning briefly to **Fig. 3,** the power corridor $P_{SoC,max}(t), P_{SoC,min}(t)$ of a TU is illustrated in the upper trace. Closures of the power corridor are visible where $P_{SoC,max}(t), P_{SoC,min}(t)$ lines converge from zero, signifying that a technical unit is not available for charging or discharging.

$$P_{SoC,max}(t) = P_{max}(t) - P_{res}(t) \qquad (1)$$

$$P_{SoC,min}(t) = P_{min}(t) - P_{res}(t) \qquad (2)$$

Determining the Energy Corridor for a single TU

The next component of the operational envelope are the time series defining the upper energy limit $E_{max}(t_n)$ and the lower energy limit $E_{min}(t_n)$. The power corridor discussed in the previous section is used to determine the energy corridor for the technical unit TU. The energy corridor is defined by the bounds of $E_{max}(t_n)$ and $E_{min}(t_n)$. The energy corridor defines the energy limits of the TU over time. $E_{min}(t_n)$ is important because it contains the energy requirements of the TU without which the TU will fail to function. In other words, before the TU can be used to supply energy to other TUs connected to an energy grid, or to the grid itself, the respective TU should satisfy $E_{min}(t_n)$. In general, $E_{min}(t_n)$ is iteratively computed using a backwards-looking computation. If $E_{min}(t_n)$ is known at a predetermined time in the future, and if the timing of a plurality, or all, prior CRs (charging requests) is known, the minimum energy at each time point $E_{min}(t_n)$ can be computed in reverse, starting at the predetermined time in the future.

According to an embodiment, computing the minimum energy time series ($E_{min}(t)$) of a respective technical unit comprises:

initializing the minimum energy time series ($E_{min}(t)$) to zero;
computing the maximum amount of energy that can be transferred to the technical unit during each charging opportunity;
for each charging opportunity of the technical unit, beginning with the final charging opportunity of the charging schedule and iterating sequentially backwards to the first charging opportunity of the charging schedule:
computing a portion of the time series representing the minimum energy time series ($E_{min}(t)$) of the respective technical unit during a charging phase of the charging opportunity, wherein:
if the corresponding maximum amount of energy that can be transferred to the technical unit during the charging opportunity is less than the minimum energy that the respective technical unit should store at the end of the charging phase:

computing a transfer energy ($E^{CR}_{transfer}$) representing the difference between the maximum amount of energy that can be transferred and the minimum energy that the respective unit should store in the charging opportunity; and

adding the transfer energy ($E^{CR}_{transfer}$) to the minimum energy that the respective technical unit should store at the end of the next charging phase backwards in the charging schedule.

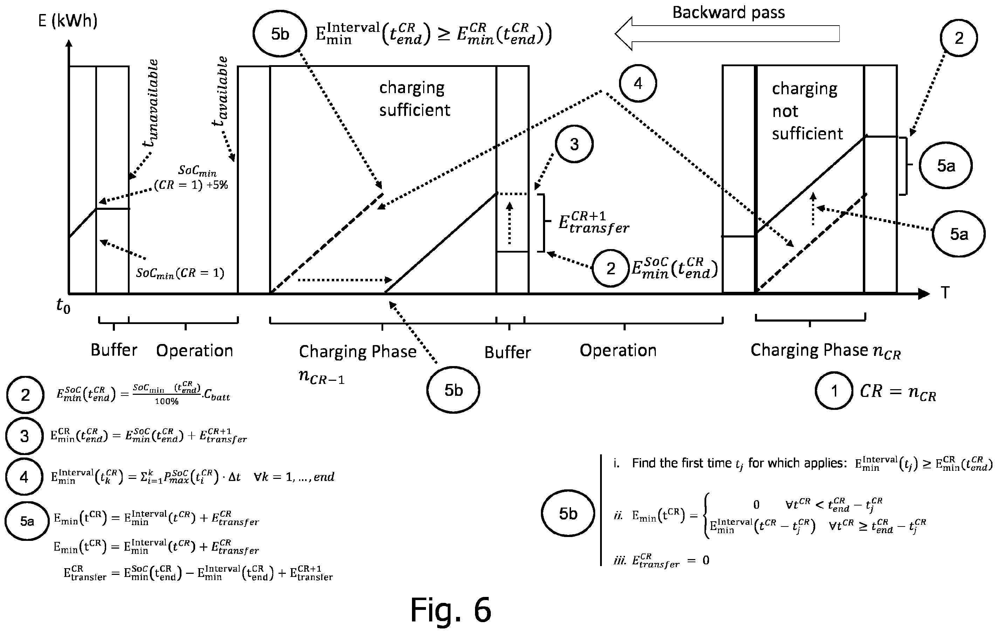

**Fig. 6** schematically illustrates a backpropagation routine used for obtaining the minimum energy time series $E_{min}(t)$.

The following exemplary pseudocode illustrates an exemplary back propagation routine used for obtaining the minimum energy time series.

| Computation of $E_{min}(t)$ for a TU based on a last CR: |
|---|
| 1. **Begin** <br> 2. Initialise $E_{min}(t) = 0 \quad \forall t = [t_0^{FL}, \dots, t_{end}^{FL}]$ <br> 3. Start at the last charging phase $(CR = n_{CR})$. |

4. Take the minimum energy at the end of the charging phase, given by the CR information: $E_{min}^{SoC}(t_{end}^{CR})$.

5. Determine the minimum energy required at the end of a charging phase, including the additional energy required for subsequent charging phases $(CR + 1)$:

$$\mathrm{E}_{min}^{CR}(t_{end}^{CR}) = E_{min}^{SoC}(t_{end}^{CR}) + E_{transfer}^{CR+1}$$

For the last charging phase, $E_{transfer}^{CR+1}$ is not defined and thus:

$$\mathrm{E}_{min}^{CR}(t_{end}^{CR}) = E_{min}^{SoC}(t_{end}^{CR})$$

6. Calculate the energy that can be achieved in each charging phase up to the time $t_k$:

$$\mathrm{E}_{min}^{Interval}(t_k^{CR}) = \Sigma_{i=1}^{k} P_{max}^{SoC}(t_i^{CR}) \cdot \Delta t \quad \forall k = 1, \dots, end$$

7. Calculate time series $E_{min}(t^{CR})$

   a. If $\mathrm{E}_{min}^{Interval}(t_{end}^{CR}) < \mathrm{E}_{min}^{CR}(t_{end}^{CR})$ (energy in charging phase is not sufficient):

      i. $E_{transfer}^{CR} = E_{min}^{SoC}(t_{end}^{CR}) - \mathrm{E}_{min}^{Interval}(t_{end}^{CR}) + E_{transfer}^{CR+1}$

      ii. $\mathrm{E}_{min}(t^{CR}) = \mathrm{E}_{min}^{Interval}(t^{CR}) + E_{transfer}^{CR}$

   b. If $\mathrm{E}_{min}^{Interval}(t_{end}^{CR}) \geq \mathrm{E}_{min}^{CR}(t_{end}^{CR})$ (energy in charging phase is sufficient):

      i. Find the first time $t_j$ for which applies: $\mathrm{E}_{min}^{Interval}(t_j) \geq \mathrm{E}_{min}^{CR}(t_{end}^{CR})$

      ii. $\mathrm{E}_{min}(t^{CR}) = \begin{cases} 0 & \forall t^{CR} < t_{end}^{CR} - t_j^{CR} \\ \mathrm{E}_{min}^{Interval}(t^{CR} - t_j^{CR}) & \forall t^{CR} \geq t_{end}^{CR} - t_j^{CR} \end{cases}$

      iii. $E_{transfer}^{CR} = 0$

8. Repeat calculation 2-6 for $CR = CR - 1$ until $CR = 1$.

9. **End.**

Turning briefly to **Fig. 3,** an example of a resulting minimum energy time series $E_{min}(t)$) obtained using the computation is illustrated by the dotted line in the middle graph of energy against time. Note, for example, that during periods of availability of the TU defined by **Fig. 3,** the highest point of $E_{min}(t)$ prior to each period of non-availability is known to the process when computing the minimum energy time series because for each charging request CR, $E_{min}^{SoC}(t_{end}^{CR})$ at the end of the period of non-availability is explicitly predefined, or alternatively computable based on an aspect of a use plan of the TU.

The time series defining the upper energy limit $E_{max}(t_n)$ is computed according to a forward pass through the one or more series of charging requests CRs given the power corridor $P_{SoC,max}(t)$, $P_{SoC,min}(t)$.

According to an embodiment, computing the maximum energy time series ($E_{max}(t)$) of a respective technical unit comprises:

> initializing the maximum energy time series ($E_{max}(t)$) to zero;
> for each charging opportunity of the technical unit, beginning with the first charging opportunity and iterating sequentially forwards to the final charging opportunity of the charging schedule;

>> calculating the initial energy of the charging phase;
>> calculating the increase in the maximum energy time series during the charging phase; and
>> calculating the initial energy for a following charging opportunity.

The following exemplary pseudocode illustrates an exemplary forward propagation routine used for obtaining the maximum energy time series.

---

## Computation of $E_{max}(t)$ for a TU based on the first CR (forward pass)

**1. Begin**

2. Initialise $E_{max}(t) = 0 \quad \forall t = [t_0^{FL}, \dots, t_{end}^{FL}]$

   a. If TU available for t=0

$$E_{start}^{CR=1} = C_{bat}$$

   b. If TU not available for t=0

$$E_{start}^{CR=1} = 0$$

3. Start at first charging phase ($CR = 1$)

4. Calculation of the initial energy of the charging phase

$$E_{max}(t_0^{CR}) = E_{start}^{CR}$$

5. Calculation of $E_{max}(t_k^{CR}) \quad \forall k = 1, \dots, end$

$$E_{max}(t_k^{CR}) = \begin{cases} E_{max}(t_{k-1}^{CR}) + P_{max}^{SoC}(t_k^{CR}) \cdot \Delta t & \text{, if: } E_{max}(t_k^{CR}) \leq E_{max}^{Battery} \\ E_{max}^{Battery} & \text{, if: } E_{max}(t_k^{CR}) > E_{max}^{Battery} \end{cases}$$

6. Calculate the initial energy for the next charging phase

$$E_{start}^{CR+1} = E_{max}(t_{end}^{CR}) - E_{min}^{SoC}(t_{end}^{CR})$$

7. Repeat calculation 2-6 for $CR = CR + 1$ to $CR = n_{CR}$

**8. End.**

---

Referring again to **Fig. 3,** the time series $E_{min}(t)$ and $E_{max}(t)$ describe the energy corridor of the operational envelope of a single TU. The energy corridor of the operational envelope defines that for each state of charge of the TU between $E_{min}(t)$ and $E_{max}(t)$, there is a charging strategy of the storage unit of the TU that will fulfil the energy requirement

$E_{min}^{SoC}(t_{end}^{CR})$ for all subsequent CRs of that TU up to a predetermined point in the future.

In other words, because the technical limits, residual power use, availability of the TU for charging, and other plannable restrictions are taken into account, the TU may be charged in line with the demands placed on it. In other words, in **Fig. 3,** the middle plot showing the minimum energy curve (dotted line $E_{min}(t)$) describes the minimum energy status of a TU that must be guaranteed ensuring that a TU is supplied with sufficient energy until the end of a charging phase.

Computation of $E_{max,delta}(t_n)$ and $E_{min,delta}(t_n)$

The final components of the operational envelope of the single TU are the time series describing the minimum and maximum energy taken by the TU at the end of a charging phase, and added again at the start of a subsequent charging phase. This time series defining the minimum and maximum amount of energy that the TU should comprise between charging phases. In the exemplary case that a TU is an electric vehicle, such as an electric bus, these two time series define the amount of energy with which the electric vehicle leaves the charging location, and the amount of energy with which the electrical vehicle returns to the charging location.

According to an embodiment, the energy consumption of the TU when it is unavailable (in other words between charging phases) is, therefore, encoded by the difference between the energy when disconnected and when reconnected to charging infrastructure (in the exemplary case of an electric vehicle, when leaving and returning).

According to an embodiment, the $E_{max,delta}(t_n)$ and $E_{min,delta}(t_n)$ time series are needed to allow the aggregation of a first operational envelope of a first TU with a second operational envelope of a second TU. For example, $E_{max,delta}(t_n)$ and $E_{min,delta}(t_n)$ are summed, as the resulting aggregated $E_{max,delta}(t_n)$ and $E_{min,delta}(t_n)$ curves encode the aggregated information of the energy distribution between the respective TUs.

The following exemplary pseudocode illustrates an exemplary iterative computation used for obtaining $E_{max,delta}(t_n)$ and $E_{min,delta}(t_n)$:

| Computation of $E_{max}^{\Delta}$ and $E_{min}^{\Delta}$ |
|---|
| **1. Begin** |
| 2. Initialise $E_{max}^{\Delta}(t) = 0 \quad \forall t = [t_0^{\text{FL}}, \dots, t_{end}^{FL}]$ & $E_{min}^{\Delta}(t) = 0 \quad \forall t = [t_0^{\text{FL}}, \dots, t_{end}^{FL}]$ |

3. Start at first charging phase ($CR = 1$)

4. Calculate the maximum and minimum energy that is available/disappears at the beginning and end of the charging phase:
$E_{max}^{\Delta}(t_0^{CR} - 1) = \mathrm{E}_{\max}(t_0^{CR}), E_{min}^{\Delta}(t_0^{CR} - 1) = \mathrm{E}_{\min}(t_0^{CR})$

$E_{max}^{\Delta}(t_{end}^{CR}) = -1 * \mathrm{E}_{\max}(t_{end}^{CR}), E_{min}^{\Delta}(t_{end}^{CR}) = -1 * \mathrm{E}_{\max}(t_{end}^{CR})$

5. Repeat calculation 3 for $CR = CR + 1$ to $CR = n_{CR}$.
**6. End.**

The previous discussion has concerned the computation of an operational envelope for one technical unit TU. According to an embodiment, an operational envelope can be computed for a TU that only contains an electrical energy storage module, such as a battery. An operational envelope can be computed for a TU that only contains generation capacity, such as solar energy installation. An operational envelope can be computed for a TU that only contains modules that consume energy, such as motors or power supplies. An operational envelope can be computed for a TU that contains a storage module and a consuming module. An operational envelope can be computed for a TU that contains a storage module, a consuming module, and a generation module.

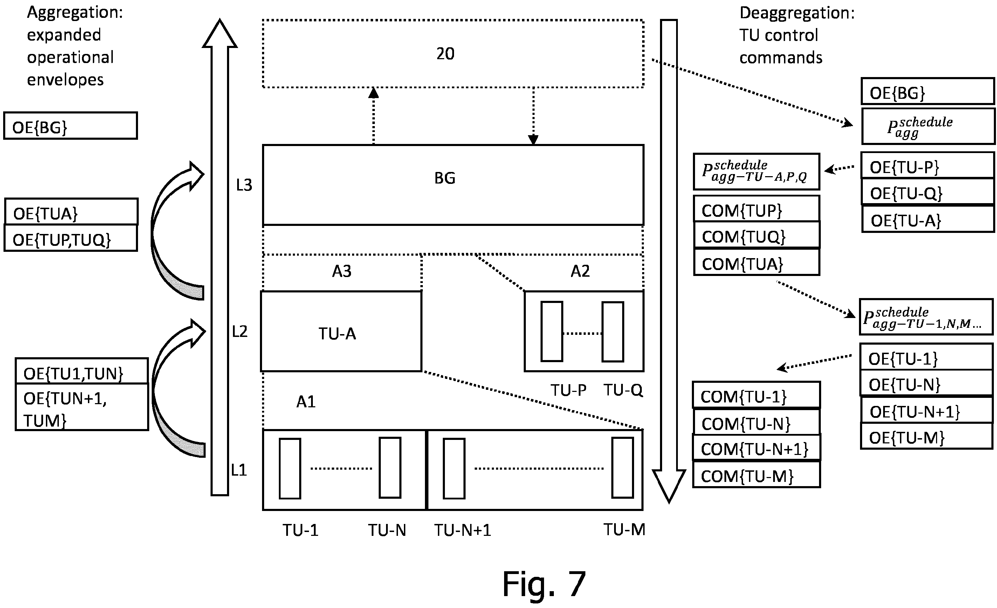

**Fig. 7** schematically illustrates an example of an aggregation/deaggregation hierarchy.

According to an embodiment, a set of TUs can comprise one or more TUs. The operational envelope of the set of TUs is, in one example, obtained by combining the operational envelopes of all TUs in the set of TUs. An operational envelope of the set of TUs can also be obtained by combining the operational envelopes of a subset of TUs in the set of TUs. Computing an operational envelope of a set of TUs based on a subset of TUs in the set of TUs may be necessary when at least one TU in the set of TUs is not available for reasons of maintenance or communication error.

According to an embodiment, one TU, and/or a set of TUs, are disposed into an aggregation level. Furthermore, by combining the operational envelopes (OE{TUN+1, TU-M}, OE{TU-1,TU-N}) of one or more TUs in the lowest aggregation level L1, the operational envelope of the aggregation level L1 results. In embodiments, the operational envelopes of each of a plurality of TUs at a first aggregation level can be combined into a single operational envelope defining a second aggregation level L2. In embodiments, the single operational envelope defining the second aggregation level L2 may be combined with operational envelopes (OE{TU-P,TU-Q}, OE{TU-A}) defining one or more further TUs, thus providing an operational envelope (OE{BG}) defining a third aggregation level L3. According to an embodiment, this aggregation level may represent a balancing group. According to an embodiment, the aggregated operational envelope at the balancing group level represents the operational envelope of a virtual battery comprising all underlying technical units.

According to an embodiment, a deaggregation operation uses one or more operational envelopes relevant to TUs comprised in a contiguously underlying aggregation level and a target power provided by a contiguously higher aggregation level $P_{agg}^{schedule}$. As an example, the operational envelopes (OE{TU-P,TU-Q}, OE{TU-A}) set limits as to how to distribute target power $P_{agg}^{schedule}$ from a higher aggregation level in the TUs of the contiguously underlying aggregation level. In the example of **Fig. 7,** $P_{agg}^{schedule}$ is provided to the balancing group level BG by an energy allocation mechanism 20.

A deaggregation computation, to be described subsequently, allocates portions of the target power $P_{agg}^{schedule}$ to respective TUs in the contiguously underlying aggregation level using the operational envelopes (OE{TU-P,TU-Q}, OE{TU-A}) of TUs in the contiguously underlying aggregation level computed in a previous aggregation operation, for example. A deaggregation computation provides that the minimal energy corridor being part of the operational envelope of each respective TU satisfies the power demand of each TU.

According to an example, the operational envelopes such as (OE{TU-P,TU-Q}, OE{TU-A}) may be stored (and periodically updated) in a database 21, hosted by a server or cloud service. In this case, when a deaggregation computation running on a deaggregator 32 (see **Fig. 1,** for example) requires one or more OEs of an aggregation level during a deaggregation computation, it may obtain the relevant OEs from the database 21.

According to an example, the operational envelopes such as (OE{TU-P,TU-Q}, OE{TU-A}) may be stored (and periodically updated) in a local processor LP1, LP2 associated a respective physical or logical TU. In this case, when a deaggregation computation running on a deaggregator 32 (see **Fig. 1,** for example) requires one or more OEs of an aggregation level during a deaggregation computation, it may obtain the relevant OEs from the local processors LP1 and/or LP2, for example.

According to an embodiment, a deaggregation operation in respect of an aggregation level may result in one or more commands COM{TUP}, COM{TUQ}, COM{TUA} for controlling a technical unit. In the example of Fig. 7, the command COM{TU-P} comprises an intermediate power schedule for TU-P, $P_{agg-TU-P}^{schedule}$. The command COM{TU-Q} comprises an intermediate power schedule for TU-Q, $P_{agg-TU-Q}^{schedule}$. The command COM{TU-A} comprises an intermediate power schedule for TU-A, $P_{agg-TU-A}^{schedule}$.

In an example, a similar deaggregation computation is carried out from aggregation level L2 to L1. In an example, technical units TUs in an intermediate level may be a combination of logical and physical TUs. In an example, technical units TU at the lowest aggregation level L1 may be entirely physical TUs.

According to an embodiment, at least one command delivered to a TU of the lowest aggregation level is configured to control or to schedule the charging time of a physical TU.

According to an embodiment, at least one command delivered to a TU of the lowest aggregation level is configured to control or to limit the charging rate of a physical TU.

According to an embodiment, at least one command delivered to a TU of the lowest aggregation level is configured to control or to limit the residual energy consumption of a TU.

In particular, a deaggregation operation may result in one or more commands for controlling a physical technical unit TU.

For example, a deaggregation command received by a TU may comprise, for example, an IP address or other identifier of the physical TU enabling addressing of the command, and a time series or analogous command defining when and how a storage unit of the respective technical unit TU should be charged using electrical energy provided by the grid 12 by the electrical energy interface 64 of the TU.

The arrangement of aggregation levels of Fig. 7 is exemplary. A skilled person will appreciate that more, or fewer, aggregation levels may be aggregated and deaggregated in any order and with many different combinations or groupings of TUs.

As a practical example, a number of electrical vehicle TUs (TU1-TU-N) of an electrical vehicle depot can be aggregated A1 as a first set of TUs at a first aggregation level L1, where the first aggregation level L1 represents energy storage and consumption modules of the electrical vehicles. The electrical vehicles are stationed in an electrical vehicle depot, which may have a further consumption modules and a solar generation module TU-N+1-TU-M. These further appliances in the electrical vehicle depot represent a second set of TUs at a first aggregation level L1.

The first and second sets of TUs are aggregated A1 by combining each operational envelope defining each TU at the first aggregation level. The aggregation of the first and second sets of TUs results in a single operational envelope that may be combined at a second aggregation level L2. The second aggregation level may comprise technical units of other electrical vehicles, for example. Aggregation of the operational envelope from the first and second electrical vehicle depots may result in operational envelope of the third aggregation level L3, with the third aggregation level representing a town or regional division of available energy resources.

In an embodiment, the third aggregation level L3 may be termed a "balancing group" BG, to be discussed subsequently. A skilled person will appreciate that more or fewer aggregation levels can be used according to techniques the present specification.

Furthermore, the variations in the individual disposition, logical connections, or composition of various types of technical units within the aggregation levels does not affect the overall concept of combining different aggregation levels using the operational envelopes of the technical units.

Furthermore, in the present specification, a technical unit TU may be considered to be an apparatus comprising one or more of a storage module, a generation, or a consuming module.

In the present specification, a technical unit TU can also be an aggregated set of TUs defined by an operational envelope. In other words, it is not essential that a physical apparatus such as an electrical vehicle needs to be present for a TU to be identifiable and/or individually addressable. At all layers of the aggregation hierarchy above the lowest layer L1, a TU can be a physical apparatus, and/or a logical interconnection of TUs from lower aggregation layers. In the case that a TU is an interconnection of TU's from lower aggregation layers, a logical TU exists. TU-A is an example of a logical technical unit.

In other words, technical unit TU-A of **Fig. 7** at aggregation layer L2 is a technical unit even though it does not comprise any hardware, but is instead a logical combination of the physical apparatuses of the first aggregation layer L1. Thus, techniques according to the present specification enable the addressing and handling of a plurality of physical technical units as if the plurality of physical technical units correspond to single physical technical unit.

This flexible approach is made possible owing to the fact that the mode of computing the operational envelope discussed previously can be applied to a single physical technical unit, a set of physical technical units, a set of physical units combined with a set of logical technical units, and/or a set of logical technical units. Once a set of physical and/or logical technical units has been aggregated into a higher aggregation layer, the set of physical and/or logical technical units can be manipulated with a single operational envelope.

A specific example of combining physical and/or logical technical units will now be presented. Throughout this specification, the term "technical unit" TU may relate to one or more physical technical units, one or more logical technical units, or a combination of both physical and logical technical units.

Individual technical units are aggregated into an aggregated technical unit by aggregating (combining) the operational envelopes of the individual technical units. As an example, the time series defining the operational envelopes are summed (added). From the set of technical units to be aggregated, time series of the same type are registered in time, and summed together.

For example, a plurality of time series defining the upper energy limit $E_{max}(t_n)$ at the end of a slot are summed together. A plurality of time series defining the lower energy limit $E_{min}(t_n)$ at the end of a slot are summed together. A plurality of time series defining the upper power limit $P_{SoC,max}(t_n)$, are summed together. A plurality of time series defining the upper power limit $P_{SoC,min}(t_n)$ are summed together. A plurality of time series defining the change in the maximum energy curve $E_{max,delta}(t_n)$ are summed together. A plurality of time series defining the change in the minimum energy curve $E_{min,delta}(t_n)$ are summed together. Where present, a plurality of time series defining the residual energy use of one or more TUs are summed together. The result of these individual and time-registered summations is a set of time series defining an operational envelope of the aggregated set of TUs. The power and energy corridor of the aggregated operational envelope thus defines all technical restrictions and requirements of the individual TUs within the set of TUs.

Equation (3) illustrates that for a number of N TUs at a given aggregation level to be aggregated, the minimum power curve $P_{\min,\text{agg}}^{SoC}(t)$ is calculated from the sum of all power curves of the technical units $P_{min,n}^{SoC}(t)$.

$$P_{\min,\text{agg}}^{SoC}(t) = \Sigma_{i=1}^{n} P_{min,n}^{SoC}(t) \quad \forall n = 1, \dots, N \quad \& \quad \forall t = [t_0^{\text{FL}}, \dots, t_{end}^{FL}] \quad (3)$$

The other time series of the aggregated operational envelope are calculated analogously from the corresponding technical unit time series $E_{max}(t_n)$, $E_{min}(t_n)$, $P_{SoC,max}(t_n)$, $P_{SoC,min}(t_n)$, $E_{max,delta}(t_n)$, and $E_{min,delta}(t_n)$.

According to an embodiment, the process of summing the operational envelopes of TUs may be repeated recursively until the upper level of the aggregation hierarchy has been reached. One operational envelope defining the behaviour of all technical units within the aggregation hierarchy is obtained.

According to an embodiment, the operational envelope defining the behaviour of all technical units of the aggregation hierarchy describes a virtual battery, or virtual storage unit.

According to an embodiment, the operational envelope defining the properties of all technical units of the aggregation hierarchy can describe an operational envelope at balancing group level.

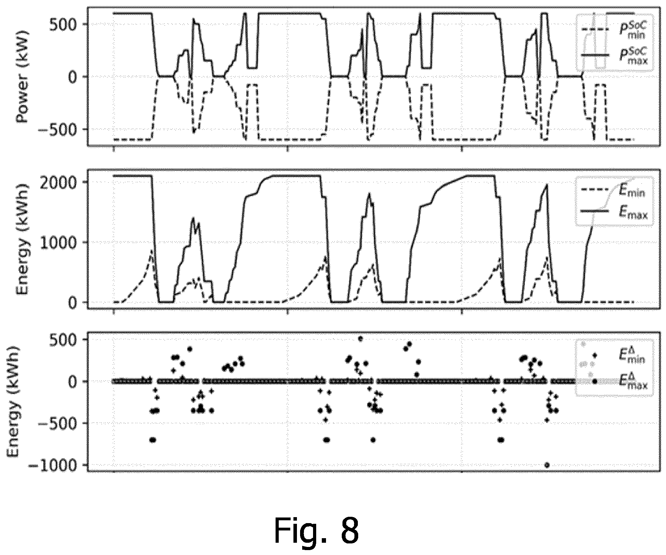

**Fig. 8** schematically illustrates a further example of an operational envelope.

In the example of the operational envelope of **Fig. 8,** the space between the $E_{min}(t_n)$ curve and the $E_{max}(t_n)$ curve describes allowed state of charge levels of the respective TU or TUs to which the operational envelope refers. Within the operational envelope, $E_{min}(t_n)$ is calculated to ensure 3 conditions.

Firstly, if the state of charge, SoC, at timepoint $t_0$ is greater than $E_{min}(t_0)$, a charging strategy exists, in accordance with the technical limits of the TU or set of TUs, which ensures an allowed $SoC(t_1) > E_{min}(t_1)$ at every timepoint $t_1 > t_0$ in the future.

Secondly, if the state of charge, SoC, of a TU or set of TUs is above $E_{min}$ ($E_{min}$ can be thought of as an "allowed state of charge"), the primary operational purpose of the TU is not restricted. For example, if the TU is an electric bus, an SoC above $E_{min}$ means that the bus can perform its scheduled journey.

Thirdly, if the SoC is in an allowed state at aggregated level, the deaggreation computation finds a solution to ensure an allowed SoC for all TUs of the contiguously lower level.

For example, the difference between the current SoC of a TU, $SoC(t_n)$, and the minimum energy curve $E_{min}(t_n)$, represents an energy surplus of the TU that can be allocated to the higher aggregation layer and used by other technical units TUs in the aggregation hierarchy, and/or provided (sold) to the grid via an energy allocation mechanism.

The result of a deaggregation of the target power is a plurality of charging and/or consumption commands (messages) sent to control one or more of the technical units TUs within the aggregation hierarchy. In an example, deaggregation is a recursive process.

Integration of a virtual battery at Balancing Group Level

The operational envelope of the highest aggregation level at balancing group level is used to compute a power allocation across the technical units TUs of the underlying aggregation hierarchy. This may be viewed as finding an optimised distribution of an overall target power schedule for a virtual battery into distinct control signals for each individual TU being part of the set of TUs, where the sum of all distinct power signals is as best as possible matching the overall target power schedule. However, it is not essential that the power schedule for the virtual battery and/or balancing group is a mathematically optimal schedule for the virtual battery. Many power schedules that are not optimal, but still represent an improvement in utilisation of the energy storage capacity of the underlying technical units, will still lead to a valid allocation of power across the technical units TUs within the deaggregation process.

According to an embodiment, the operational envelope describes the aggregated TUs of a balancing group, and wherein, after computing the operational envelope, there is further provided: generating a charging schedule for a plurality of technical units comprised in the balancing group using the operational envelope of the balancing group.

According to an embodiment, to compute the power allocation across the technical units TUs, the energy curve $E_{agg}(t)$ of the virtual battery should computed to be within the limit values of the energy corridor $[E_{max}(t_n) \ E_{min}(t_n)]$ of the virtual battery as set by the power corridor $[P_{SoC,max}(t_n); P_{SoC,min}(t_n)]$ of the virtual battery.

According to an embodiment, the following correlations apply to the optimisation (allocation) of the virtual battery:

$$E_{min}(t) \leq E_{agg}(t) \leq E_{max}(t) \qquad \forall t = [t_0^{\text{FL}}, \dots, t_{end}^{FL}] \qquad (4)$$

$$P_{min}^{SoC}(t) \leq P^{SoC}(t) \leq P_{max}^{SoC}(t_n) \qquad \forall t = [t_0^{\text{FL}}, \dots, t_{end}^{FL}] \qquad (5)$$

$$E^{\Delta}_{min}(t) \leq E^{\Delta}(t) \leq E^{\Delta}_{max}(t) \qquad\qquad \forall t = [t^{\mathrm{FL}}_0, ..., t^{FL}_{end}] \qquad\qquad (6)$$

According to an embodiment, the energy curve of the virtual battery $E_{agg}(t)$ is calculated iteratively. The iterations depend on the available charging capacity $P^{SoC}(t)$ and the energy change $E^{\Delta}(t)$, wherein the energy change defines the temporary availability of at least one storage module of technical units TUs of the underlying aggregation hierarchy. According to the use case of storage modules comprised within electrical vehicles, such as electrical buses, the temporary availability of at least one storage module corresponds to arrival and departure times of the electrical buses, and their corresponding connection and disconnection times from charging modules at the electrical vehicle depot.

$$E(t) = E(t-1) + P^{SoC}(t) * \Delta t + E^{\Delta}(t) \; \forall t = [t^{\mathrm{FL}}_1, ..., t^{FL}_{end}] \qquad\qquad (7)$$

According to an embodiment, an improved, or optimal, charging schedule $P^{SoC}(t)$ of the virtual battery is performed according to degrees of freedom defined by the following energy limits:

$$P^{SoC}(t) \geq max\left( P^{SoC}_{min}(t), \; \frac{E_{min}(t) - E_{agg}(t-1) - E^{\Delta}_{min}(t)}{\Delta t} \right) \qquad\qquad (8)$$

$$P^{SoC}(t) \leq min\left( P^{SoC}_{max}(t), \; \frac{E_{max}(t) - E_{agg}(t-1) - E^{\Delta}_{max}(t)}{\Delta t} \right) \qquad\qquad (9)$$

The allocation, and/or optimisation results in an overall power schedule $P^{schedule}_{agg}(t)$ that specifies the target power for the virtual battery, representing a set of technical units TUs.

According to an embodiment, the energy allocation mechanism 20 is an energy market. According to an embodiment, the optimisation of the virtual battery is performed using energy trading algorithms on the energy market. According to an embodiment, the operational envelope of the virtual battery (for the number of timeslots for which it is intended to make the virtual battery available for energy trading) is provided to the energy allocation mechanism 20 is an input. The energy allocation mechanism 20 performs mechanisms to improve or optimise the use of the spare energy capacity defined by the operational envelope of virtual battery. The energy allocation mechanism 20 responds to the processor controlling the deaggregation of the virtual battery with one or more energy reservations of the virtual battery performed within the degrees of freedom defined by equations (8) and (9) above. These energy reservations are converted into an improved, or optimised, target power schedule for the virtual battery is deaggregated down through the aggregation hierarchy to derive control specifications for the logical technical units, and eventually the physical technical units of the overall system.

According to an embodiment, the energy allocation mechanism 20 is a machine learning model.

According to an embodiment, the energy allocation mechanism 20 is a rule-based system.

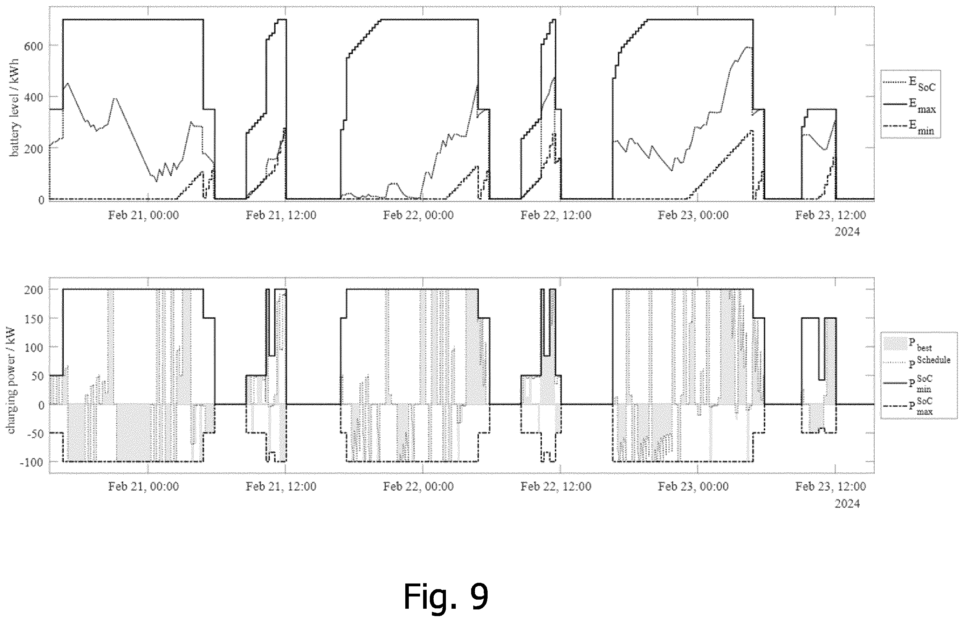

**Fig. 9** schematically illustrates an example of optimizing energy allocation to a lower aggregation level during deaggregation.

In embodiments, the one or more individual technical units may comprise residual energy consumers such that the residual power should also be taken into account in the design of the charging schedule:

$$P^{schedule}_{agg}(t) = P^{SoC}(t) + p_{res}(t) \qquad\qquad (10)$$

Deaggregation

Deaggregation is an iterative computation that converts an aggregated target power value for an aggregated TU into target power values for a second, contiguously underlying aggregation level. In other words, the target power schedule of a contiguously higher aggregation level is deaggregated using the separate operational envelopes OEs of the TUs comprising the contiguously underlying aggregation level.

The deaggregation computation is divided into a first step of preparing the power distribution and a second step of distributing power from a contiguously higher aggregation level between technical units of the contiguously underlying aggregation level, using the operational envelopes of each TU in the contiguously underlying aggregation level.

At the lowest aggregation level L1, target power values for individual technical units (physical technical units) can be issued as charging commands and/or discharging commands. These commands are, in an embodiment, communicated to a local control unit of the technical unit, thus enabling control of the respective technical unit according to the computed deaggregation scheme. When all technical units perform this deaggregation in the computed sequence, the energy demand agreed with the energy allocation step during the computation of $P_{agg}^{schedule}(t)$ can be met.

In the following explanation, the overall power schedule refers to the aggregated variable of a higher level asset, while discussion of a technical unit refers to a contiguously lower level of the aggregation hierarchy. The deaggregation concept applies equally to all aggregation levels. The charging schedules of the technical units are calculated using the aggregated target power schedule $P_{agg}^{schedule}(t)$. The deaggregation computation can be applied to physical TUs (for example, real apparatuses at the bottom level L1 of the aggregation hierarchy) and also to logical TUs (an example of a logical TU is a previously aggregated group of physical TUs at level L2 of the aggregation hierarchy).

According to an embodiment, the technical unit charging schedules are calculated using the aggregated target power schedule $P_{agg}^{schedule}(t)$ as well as the operational envelopes of the one or more technical units of the contiguously underlying aggregation level, and initial energy levels of the technical units of the contiguously underlying aggregation level.

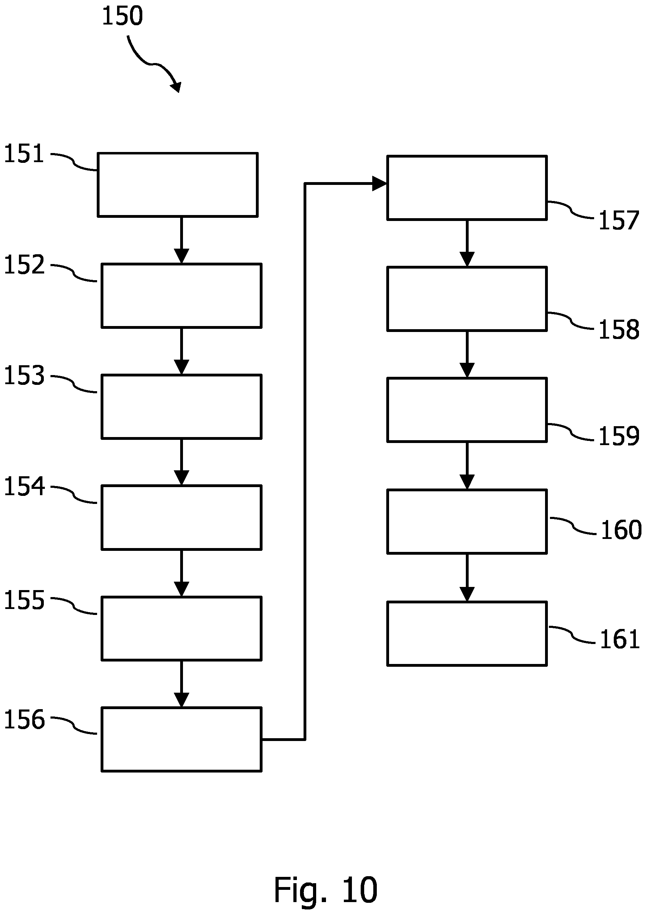

**Fig. 10** schematically illustrates a method according to the second aspect.

In general terms, the deaggregation computation can be described with regards to the following statement.

According to a second aspect, there is provided a computer-implemented method 150 for controlling the distribution of electrical energy to a set of technical units, the method comprising:

> obtaining 151 an aggregated target power schedule, $P_{agg}^{schedule}$, defining a target power output for a set of technical units, TU;
> obtaining 152 an operational envelope, OE, for each technical unit of the set of technical units, TU;
> 
> computing 153, for each technical unit, TU, of the set of technical units, a minimum power schedule, $P_{TU}^{desired}$, using the corresponding operational envelope, OE, of each technical unit, based on a rule that charging of each technical unit occurs when a predicted state of charge of a technical unit reaches a predetermined state of charge of the respective technical unit;
> 
> aggregating 154 the minimum power schedule, $P_{TU}^{desired}(t)$, of each technical unit of the set of technical units to form an aggregated minimum power schedule $P_{agg}^{desired}(t)$;
> 
> determining 155, using the aggregated target power schedule, $P_{agg}^{schedule}(t)$, and the aggregated minimum power schedule, $P_{agg}^{desired}(t)$, a delta schedule, $P_{TU}^{delta}(t)$ per technical unit, TU, wherein the delta schedule characterises a power surplus or power shortfall for each technical unit, TU, of the set of technical units;
> 
> computing 156 a distribution of the power represented by the delta schedule amongst the set of technical units as a load schedule, $P_{TU}^{load}(t)$, of each technical unit, TU, wherein computing the distribution comprises:
> for each technical unit, TU, in the set of technical units:
> 
>> allocating 157 a first portion of power represented by the delta schedule, $P_{TU}^{delta}(t)$, to each technical unit, TU, in the set of technical units;
>> aggregating 158 each of the energy, $E_{min}$, $E_{max}$, and power , $P_{min}$, $P_{max}$, corridors comprised in operational envelopes of the remaining technical units in the set of technical units to which no allocation from the delta schedule, $P_{TU}^{delta}(t)$ has been made;
>> verifying 159 that an unallocated power delta, represented by a second portion of the delta schedule, $P_{remainder}^{delta}$, can be distributed to the remaining technical units, TU; and
>> 
>> if the power represented by the second portion of the delta schedule, $P_{remainder}^{delta}$, can be distributed to the remaining technical units:
>> 
>>> designating 160 the minimum power schedule $P_{TU}^{desired}$, and the first portion of the delta schedule,

$$P^{delta}_{remainder} \text{, as a load schedule, } P^{load}_{TU}(t) \text{, to each technical unit, TU, and}$$

controlling 161 at least one technical unit of the set of technical units according to the corresponding load schedule, $P^{load}_{TU}(t)$, for each technical unit.

According to an embodiment, computing a charging schedule for the set of technical units using the operational envelope comprises:

computing an energy curve of the set of technical units defined by the operational envelope; and
allocating a state of charge of the set of technical units according to an allocation strategy; and

recomputing the charging schedule based on the allocated state of charge.

The previous general definition of the deaggregation computation, and specific embodiments combinable with this general definition, will now be discussed in more detail.

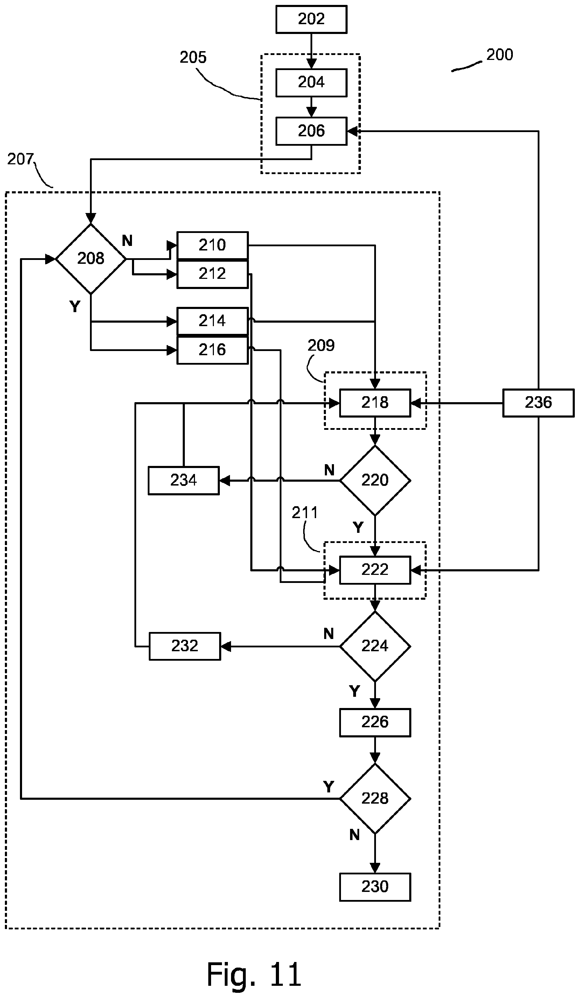

**Fig. 11** schematically illustrates an exemplary method of deaggregation.

Overview of deaggregation

An overview of the computation will now be given. The computation may be performed by one, or more, processors of a deaggregation apparatus. According to an embodiment, in a preparatory phase 205 of the distribution, the aggregated target power schedule $P^{schedule}_{agg}(t)$ is obtained as represented at 202. The preparatory phase 205 comprises adjusting the target power for $t = 0$ and calculating $P_{schedule,target}$ ($t = 0$). The prepatory phase 205 also comprises calculating, for all technical units TU, the time series $P_{desired,TU}$ and $P_{delta,TU}$. Additionally the $P_{desired,agg}$ and the $P_{delta,agg}$ will be calculated.

According to an embodiment, after the prepatory phase 205, the computation enters an iterative deaggregation subroutine 207. For each technical unit TU, if no assets have already been optimised, there is a step 210 of sending the first $P_{desired,TU}$, $P_{delta,TU}$ to the first instance 209.

According to an embodiment, the first instance 209 performs a step of optimisation or improvement of the instant technical unit TU. For example, step 218 calculates $P_{load,TU}$ and $P_{delta\ to\ compensate}$.

According to an embodiment, at step 220, a check is made as to whether, or not, $P_{delta\ to}$ *compensate* = 0. If $P_{delta\ to}$ *compensate* = 0 (true), computation flow proceeds to the second instance 211 of the deaggregation computation. If the condition of step 220 is not true, a computation of $P_{delta,TU} = P_{delta,TU} + P_{delta\ to\ compensate}$ is performed at step 234, with the iteration returning to step 218.

According to an embodiment, the second instance 211 of the deaggregation computation the remaining operational envelope of the instant TU of the iteration being optimised is verified, in addition to the remaining time series defining the $P_{schedule}$.

According to an embodiment, at step 224, a comparison is performed to examine whether, or not, $P_{delta\ to\ compensate,remainder}$ is zero. If the outcome of this comparison is negative, $P_{delta,TU}$ is accumulated by assigning $P_{delta,TU} = P_{delta,TU} + P_{delta\ to\ compensate,remainder}$ at step 232. If the outcome of the comparison of step 224 is positive, the quantity $P_{load,TU}$ is stored at step 226.

According to an embodiment, a check is made as to whether, or not, more computations in respect of technical units TU in the current aggregation level need to be iterated through 228.

According to an embodiment, if the result of step 228 is that more computations in respect of technical units TU in the current aggregation level need to be iterated through 228, then computation flow returns to step 208. At step 208, if it is determined that the instant TU of the iteration has been optimized, then steps 214 and 216 are followed to process the next eligible value of $P_{desired,TU}$, $P_{delta,TU}$, and $P_{delta,remainder}$ with the first instance 209.

According to an embodiment, if the check of step 228 returns a negative result, then $P_{load,TU}$ has been computed for all technical units, and the computation finishes.

According to an embodiment, entity 236 represents a stored plurality of operational envelopes for corresponding technical units TU of a system, or aggregation layer. The available operational envelopes of a set of TUs is provided to the first instance, and the remainder of the set of operational envelopes is provided to the second instance, step 222, after the step of the optimisation of the instant technical unit TU at step 218.

According to an embodiment, entity 236 represents a database that is communicably coupled to all TUs in the system. The database maintains a record of the operational envelope of each TU, and/or of the operational envelopes of each aggregated layer. The database 21 and/or local processors LP1, LP2 illustrated by **Fig. 1** may be considered to host entity 236, in an example.

According to an embodiment, entity 236 represents a distributed data storage system. Each TU may store its individual operational envelope, and provide the operational envelope to an aggregation or deaggregation computation on request from a logical entity or processor performing a deaggregation computation. The database maintains a record of the operational envelope of each TU, and/or of the operational envelopes of each aggregated layer. In other words, whilst the computation 200 deaggregates the aggregated target power schedule , the computation maintains an overview of the target power schedule and the operational envelopes of every technical unit.

These aforementioned aspects of the deaggregation computation, as illustrated in **Fig. 11,** will now be explained in greater detail.

Preparing the power distribution

According to an embodiment, a target power for the current time instant is adjusted according to the energy already used in the current delivery period (slot) $\left(E_{agg}^{con}\right)$. For each delivery period of the predetermined length of the delivery period $\Delta t$, an average value at a grid connection point to the balancing group defines the balance in the balancing group. Typically, $\Delta t$ is 15 minutes. Any necessary corrections to the energy balance can be made in the remaining time $\Delta t_0$ until the end of the delivery period:

$$\Delta t_0 = \Delta t - t_{current\ time} \qquad (11)$$

Energy still to be used, $E_{agg}^{\Delta}$, is calculated from the energy already used, $E_{agg}^{con}$, and the target power value, $P_{agg}^{schedule}$, of the current delivery period:

$$E_{agg}^{\Delta} = P_{agg}^{schedule}(t_0) * \Delta t - E_{agg}^{con} \qquad (12)$$

The time series of the target power for the deaggregation $P_{target}^{schedule}(t)$ then results as:

$$P_{target}^{schedule}(t_0) = E_{agg}^{\Delta} / t_{end}^{interval} \qquad (13)$$

$$P_{target}^{schedule}(t) = P_{agg}^{schedule}(t) \qquad \forall t = [t_1^{\mathrm{FL}}, ..., t_{end}^{FL}] \qquad (14)$$

Calculation of $P_{\mathrm{TU}}^{desired}(t)$

According to an embodiment, a minimum power schedule $P_{\mathrm{TU}}^{desired}(t)$ of a technical unit TU in the contiguously underlying level of the aggregation hierarchy is calculated for each technical unit. In an example, the minimum power schedule is computed according to the rule that charging only takes place when the predicted state of charge $E_{\mathrm{TU}}(t)$ for a given technical unit reaches the $E_{min,\mathrm{TU}}(t)$ minimum energy limit of the given technical unit. In other words, the minimum power schedule may be computed according to a rule that a storage unit of a respective TU has reached the point where it must be charged.

According to this exemplary rule, the given technical unit should be charged at that time in the schedule, to avoid running out of energy. A skilled person appreciates that other rules for charging the technical units in the underlying level of the aggregation hierarchy may be provided as part of the deaggregation computation.

Another example of a rule for computing the minimum power schedule $P_{\mathrm{TU}}^{desired}(t)$ is that charging of storage units of one or more TUs is initiated at a point in time when the predicted state of charge of a storage unit of the one or more TUs falls below a predetermined threshold set by an operator of the TU.

According to an embodiment, a current state of charge of each technical unit is used to compute the minimum power schedule for each technical unit. Based on the current state of charge of each technical unit, the variable $E_{\mathrm{TU}}^{over}$ is

computed. $E_{\text{TU}}^{over}$ describes the surplus energy in a given technical unit TU immediately prior to a point of nonavailability of the given technical unit. In the case of the electrical vehicle example, a point of nonavailability is triggered by the imminent departure of the electrical vehicle from its charging point as defined in the charging schedule of the electrical vehicle.

According to an embodiment, a minimum power schedule $P_{\text{TU}}^{desired}(t)$ is therefore calculated for each TU. The minimum power schedule may be computed according to one or more predetermined rules. For example, a rule for computing the minimum power schedule is that charging of storage units of one or more TUs is initiated at a point in time when the predicted state of charge of a storage unit of the one or more TUs falls to the minimum energy limit $E_{min,\text{TU}}(t)$ of that storage unit.

The minimum energy limit $E_{min,\text{TU}}(t)$ for each TU is available, for example, in the previously computed operational envelope for that TU, as computed in an aggregation of the TU. The value of $E_{min,TU}(t)$, for a given TU, can be obtained by a database lookup, for example, as represented by entity 236 of **Fig. 11**.

According to this rule, the computation of the minimum power schedule $P_{\text{TU}}^{desired}(t)$ obtains the current state of charge of a respective TU $SoC_{\text{TU}}$. A variable $E_{\text{TU}}^{over}$ is calculated. $E_{\text{TU}}^{over}$ describes the surplus energy in the respective TU at one or more time points when the TU is not available. In the case that the TU is an electric vehicle, a time point when the TU is not available corresponds to a time of departure when the electric vehicle is disconnected from the charging network.

To compute the minimum power schedule $P_{\text{TU}}^{desired}(t)$, energy consumption of the TU $E_{\text{TU}}^{consumption}$ is taken into consideration for the calculation of $E_{\text{TU}}^{over}$. The $E_{SoC,\text{TU}}$ it is applied for the time point $t = t_0$. The minimum power schedule $P_{\text{TU}}^{desired}$ is then computed iteratively.

The following exemplary pseudocode illustrates an exemplary computation of the minimum power schedule $P_{\text{TU}}^{desired}$.

---

Computation of $P_{\text{TU}}^{desired}$

**1. Begin.**
2. Determine the energy required per TU

$$E_{\text{TU}}(t) = \begin{cases} \max\left(E_{SoC,\text{TU}}, E_{min,\text{TU}}(t_0)\right) & , \forall t:\ t = t_0 \\ \max\left(E_{\text{TU}}(t-1) + E_{\text{TU}}^{over}, E_{min,\text{TU}}(t)\right) & , \forall t:\ t > t_0 \end{cases}$$

3. Determine the minimum charging power per TU

---

$$P_{\text{TU}}^{desired}(t) = \begin{cases} (E_{\text{TU}}(t) - E_{SoC,\text{TU}})/\Delta t_0 & , \forall t: \ t = t_0 \\ (E_{\text{TU}}(t) - E_{\text{TU}}(t-1))/\Delta t & , \forall t: \ t > t_0 \end{cases}$$

4. Determine $E_{\text{TU}}^{over}$ for the next iteration

    a. If $t = t_{stop}$ :
$$E_{\text{TU}}^{over} = E_{\text{TU}}(t) - E_{\text{TU}}^{consumption}(t)$$
    b. If $t = t_{start}$ :
$$E_{\text{TU}}^{over} = 0$$
    c. Else:
$$E_{\text{TU}}^{over} = E_{\text{TU}}^{over}$$

5. Iterate $\forall t = [t_1^{\text{FL}}, \dots, t_{end}^{FL}]$ and all TUs
6. **End.**

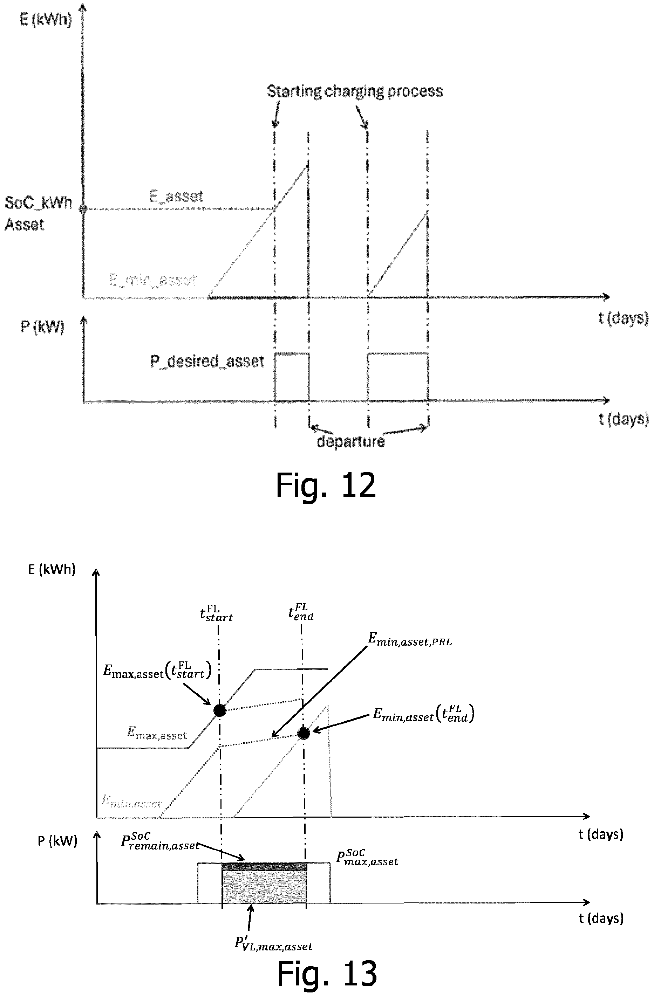

**Fig. 12** schematically illustrates computation of a desired power level $\mathbf{P_{TU}^{desired}}$ .

Aggregation of $P_{TU}^{desired}$

According to an embodiment, the next stage of the deaggregation computation involves a summation of individual minimum charging schedules of each TU in the underlying level of the aggregation hierarchy. The summation of the individual charging schedules results in the timeseries $P_{agg}^{desired}(t)$. The time series $P_{agg}^{desired}(t)$ can be used to determine a timeseries characterising surplus or shortfall of power per TU, $P_{\text{TU}}^{delta}(t)$ in the underlying level of the aggregation hierarchy during a deaggregation. The surplus or shortfall can be identified per delivery period (slot), typically of 15 minutes.

According to an embodiment, the method of the first aspect further comprises verifying that the allocated energy represented by the sum of the minimum power schedule, $P_{TU}^{desired}(t)$, and the delta schedule, $P_{TU}^{delta}(t)$, covers a demand of a respective TU and is in accordance with the operational envelope of the respective technical unit.

According to an embodiment, computing the minimum power schedule $\left(P_{agg}^{desired}(\text{t})\right)$ further comprises: for each technical unit in the set of technical units:

    computing the energy required per technical unit;
    determining the minimum charging power per technical unit;
    determining the excess energy for each technical unit based on the charging schedule for the respective asset.

According to an embodiment, to perform the aforementioned aggregation of $P_{TU}^{desired}$ computation as part of the deaggregation process, an equal distribution of the surplus or shortfall per delivery period is assumed for a number M of TUs in the underlying aggregation level. A skilled person will appreciate that the use of an equal distribution of the surplus or shortfall per delivery period is one example. There may be implementation scenarios where the surplus or shortfall per delivery period may be distributed between TUs in an unequal way based, for example, on a statistical measure, a use schedule (such as a bus timetable) of a TU, or other rule. The computation of $P_{agg}^{desired}(t)$ and $P_{TU}^{delta}(t)$ are performed as follows:

$$P_{agg}^{desired}(t) = \sum_{TU=1}^{M} P_{TU}^{desired}(t) \qquad \forall TU = 1, \dots, M \quad \forall t = [t_0^{FL}, \dots, t_{end}^{FL}] \qquad (15)$$

$$P_{TU}^{delta}(t) = \left( P_{agg}^{desired}(t) - P_{target}^{schedule}(t) \right) / M \qquad \forall t = [t_0^{FL}, \dots, t_{end}^{FL}] \qquad (16)$$

Distribution

The second step of the deaggregation is a distribution of available power in a present aggregation level (for example, L2) to TUs (physical or logical) in the contiguously underlying aggregation level (for example, L1). The distribution step is split into two instances. According to the first instance of the distribution, power to an instant TU is allocated, or optimised. According to the second instance of the distribution, a check is performed as to whether the remaining power schedule in a present aggregation level is sufficient for distribution to remaining TUs in the contiguously underlying aggregation level that have not yet had power allocated to them.

According to an embodiment, the first distribution instance and the second distribution instance are performed for each TU in the contiguously underlying aggregation level in the form of a recursive calculation. In other words, the available power in the present aggregation level (for example, L2) is sequentially distributed to individual TUs in the contiguously underlying aggregation level. This, therefore, sequentially reduces the magnitude of the time series defining the power schedule of the power remaining in the present aggregation level (for example, L2).

The computation of the distribution of power remaining in TUs of the present aggregation level to TUs of a contiguously underlying aggregation level uses the operational envelopes of the relevant TUs of the present aggregation level to TUs of a contiguously underlying aggregation level. For this distribution algorithm the inputs of the operational envelopes, $P_{TU}^{desired}$, $P_{agg}^{desired}$, $P_{TU}^{delta}$, $E_{SoC,TU}$ are used to calculate the corresponding charging schedules $P_{TU}^{load}$ of TUs in the contiguously underlying aggregation level.

Calculation of the prognosed power schedule $P_{TU}^{prog}$ for each TU (first instance):

In the first instance, an improved or optimised charging schedule is calculated. The maximum $P_{max,TU}$ charging power and minimum discharging power $P_{min,TU}$ are determined. The computation of the distribution is divided into the possible charging and discharging power due to the state of charge in the present, and the contiguously underlying aggregation level and the power limits $P_{min,TU}^{SoC}$ and $P_{max,TU}^{SoC}$ of a respective TU in the contiguously underlying aggregation level. The possible charging and discharging power of a TU is defined by the current status of its operational envelope.

According to an embodiment, the time index for the computation of each prognosed power schedule is the schedule of the distribution slots, which are typically 15 minutes long. As explained in relation to the computation of $P_{TU}^{desired}$, a distinction is made between an initial time in a respective slot with $t = t_0$ and the subsequent times in a slot $t > t_0$. Therefore $E_{SoC,TU}$ will be replaced for $t > t_0$ with $E_{TU}^{prog}(t-1)$, which is the prognosed energy curve.

The following exemplary pseudocode illustrates an exemplary computation of the distribution of available power in a present aggregation level:

Computation of Distribution

**1. Begin.**

2. Determine the maximal charging power per TU with the limitation $P_{max,asset}^{SoC}$

$$P_{max,TU}(t)$$
$$= \begin{cases} \min\left(E_{capacity\ max,TU}(t_0) - E_{SoC,TU} * \Delta t_0), P_{max,TU}^{SoC}\right) & ,\forall t:\ t = t_0 \\ \min\left(E_{capacity\ max,TU}(t) - E_{TU}^{prog}(t-1) * \Delta t), P_{max,TU}^{SoC}\right) & ,\forall t:\ t > t_0 \end{cases}$$

3. Determine the discharging power per TU with the limitation $P_{min,TU}^{SoC}$

$$P_{min,TU}(t) = \begin{cases} \max\left(E_{min,TU}(t_0) - E_{SoC,TU} * \Delta t_0), P_{min,TU}^{SoC}\right) & ,\forall t:\ t = t_0 \\ \max\left(E_{min,TU}(t) - E_{TU}^{prog}(t-1) * \Delta t), P_{min,TU}^{SoC}\right) & ,\forall t:\ t > t_0 \end{cases}$$

4. Determine the prognosed power $P_{TU}^{prog}$ with $P_{TU}^{desired}$ and $P_{TU}^{delta}$. The two calculated limits are used for limiting the prognosed power:

$$P_{TU}^{prog}(t) = \min\left(\max\left(P_{TU}^{desired}(t) + P_{TU}^{delta}\right), P_{min,TU}(t)\right), P_{max,TU}(t)\right)$$

5. Determine the prognosed energy curve $E_{TU}^{prog}$

$$E_{TU}^{prog}(t) = \begin{cases} E_{SoC,TU} + (P^{prog}(t_0) * \Delta t_0) & ,\forall t:\ t = t_0 \\ E_{TU}^{prog}(t-1) + E_{TU}^{over} + (P_{TU}^{prog}(t) * \Delta t) & ,\forall t:\ t > t_0 \end{cases}$$

---

6. Determine $E_{TU}^{over}$ for the next iteration

    a. If $t = stop$ describes a departure/start of a non-availability:
$$E_{TU}^{over} = E_{TU}(t) - E_{TU}^{consumption}(t)$$

    b. If $t = start$ describes an arrival/start of a charging phase:
$$E_{TU}^{over} = 0$$

    c. Else:
$$E_{TU}^{over} = E_{TU}^{over}$$

7. Iterate $\forall t = [t_1^{FL}, \dots, t_{end}^{FL}]$ and all TUs

**8. End.**

Feasibility check of the power distribution

After the computation of the time series $E_{TU}^{prog}$ and $P_{TU}^{prog}$, the power difference still to be compensated $P_{delta\ to\ compensate}$ is determined. This power difference is an indication of whether, or not, the power and energy limits in the TUs of the contiguously underlying level have been met, and whether or not the $P_{TU}^{delta}$ remaining in the present aggregation level has been fully distributed. The power difference still to be compensated $P_{delta\,to\,compensate}$ is determined according to expression (17):

$$P_{delta\,to\,compensate}(t) = P_{TU}^{delta}(t) - (P_{TU}^{prog}(t) - P_{TU}^{desired}(t)) \qquad \forall t \qquad (17)$$
$$= [t_0^{\mathrm{FL}}, ..., t_{end}^{FL}]$$

According to an exemplary first case where $P_{delta\,to\,compensate}$ is zero, then the charging schedule can be implemented and the second instance is executed immediately. According to an exemplary second case where $P_{delta\,to\,compensate}$ is not equal to zero, the $P_{TU}^{delta}$ is adjusted according to expression (18).

$$P_{TU}^{delta}(t) = P_{TU}^{delta}(t) - P_{delta\,to\,compensate}(t) \qquad \forall t = [t_0^{\mathrm{FL}}, ..., t_{end}^{FL}] \qquad (18)$$

The first instance of the distribution computation is then repeated with the new $P_{TU}^{delta}(t)$.

Checking the power of the remaining TUs (second instance)

In the second instance of the distribution of power from a present aggregation level to a contiguously underlying aggregation level, a computation is performed to determine whether, or not, the limits of the remaining TUs can be accommodated within the remaining charging schedule.

According to the second instance, the same computation of distribution detailed above for the first instance is used for the second instance, with the difference that time series (signals) detailed in the computation of distribution with the suffix "-TU" are replaced with the remaining TUs of the iteration (-"remainder").

According to an embodiment, initial stage of the second instance is to aggregate the operational envelopes of the remaining TUs. Accordingly, operational envelopes of a number M of TUs are summed, except for a current TU (indexed m).

As an example, expression (19) demonstrates the aggregation for the example of time series $E_{min,reminder}$ of an operational envelope. A skilled person will appreciate that expression (19) may also be performed for the time series $P_{SoC,max,remainder}(t)$, $P_{SoC,min,remainder}(t)$. $E_{max,remainder}(t)$ $E_{max,delta,remainder}(t_n)$, $E_{min,delta,remainder}(t_n)$, and optionally $P_{res,remainder}(t)$.

$$E_{min,remainder}(t) = \sum_{TU\,=\,m+1}^{M} E_{min,TU}(t) \qquad (19)$$
$$\forall TU = m + 1, ..., M \ \forall t = [t_0^{\mathrm{FL}}, ..., t_{end}^{FL}]$$

According to an embodiment, a proposed remaining charging schedule $(P_{reminder}^{desired})$ is obtained by subtracting the current $P_{TU}^{desired}$ from $P_{agg}^{desired}$:

$$P_{remainder}^{desired}(t) = P_{agg}^{desired}(t) - P_{TU}^{desired}(t) \qquad \forall t = [t_0^{\mathrm{FL}}, ..., t_{end}^{FL}] \qquad (20)$$

According to an embodiment, a proposed residual power difference $P_{remainder}^{delta}(t)$ is obtained by subtracting $P_{agg}^{delta}(t)$ from $P_{TU}^{delta}(t)$:

$$P_{remainder}^{delta}(t) = P_{agg}^{delta}(t) - P_{TU}^{delta}(t) \qquad \forall t = [t_0^{\mathrm{FL}}, ..., t_{end}^{FL}] \qquad (21)$$

According to an embodiment, and analogously to the computation performed in the second instance, a check is made to ensure that the aggregated charging schedule can be distributed.

According to an embodiment, if the unallocated power delta represented by the second portion of the delta schedule, $P_{remainder}^{delta}(t)$, cannot be distributed to the remaining technical units, the first portion of the power represented by the first portion of the delta schedule, $P_{TU}^{delta}(t)$, to each technical unit, TU, in the set of technical units is adjusted, and the computation of the distribution of the energy represented by the second portion of the delta schedule, $P_{remainder}^{delta}(t)$, amongst the set of technical units is repeated.

In a first case where the distribution is possible, the loading schedule (of the instant technical unit TU) is adopted, and the computation starts again from the beginning with the calculation of the loading schedule of the next TU. In a second case where the distribution is not possible, in other words if the time series $P_{compensate\ remainder}^{\Delta}$ is not equal to zero, then the $P_{TU}^{delta}$ is to be adjusted. In this second case, the computation according to the first instance for the current calculated TU is performed again with the newly calculated $P_{TU}^{delta}$, as defined by expression (22).

$$P_{TU}^{delta}(t) = P_{TU}^{delta}(t) - P_{compensate\ remainder}^{\Delta}(t) \qquad \forall t = [t_0^{FL}, ..., t_{end}^{FL}] \qquad (22)$$

According to an embodiment, the distribution computation is performed for a predetermined number of iterations in order to find a preferred adjustment of the loading schedule of each TU in the contiguously underlying aggregation level.

According to an embodiment, when the first TU has been distributed, the distribution computation is performed for the next (successive) TU. The distribution computation is performed for all TUs in the contiguously underlying aggregation level.

The second aspect comprises a step of controlling 168 at least one technical unit of the set of technical units according to the corresponding load schedule $P_{TU}^{load}(t)$ for each technical unit.

According to an embodiment, controlling 168 comprises generating one or more data commands by the processor of an apparatus performing the deaggregation. The data commands may comprise operational instructions to one or more of an electrical energy storage unit 50, a consumption unit 52, an electrical energy interface 64, a residual load 62, and/or a generator unit 54 comprised in a technical unit.

The data commands are transmitted to one or more deaggregated TUs over a communications network which may comprise one, or any combination, of a LAN, WAN, TCP/IP, 5G, 6G OpenADR, and/or IEC 604.

According to an embodiment, a deaggregation command received by a TU may comprise, for example, a time series or analogous command defining when and how the storage unit of the respective technical unit TU should be charged using electrical energy provided by the grid 12 by the electrical energy interface 64 of the TU.

According to an embodiment, after a deaggregation, the predicted load schedule $P_{TU}^{prog}$ for each TU is sent as $P_{TU}^{load}$. For example, an apparatus comprising a processor performing the deaggregation computation generates one or more commands to transmit to corresponding to use over a communication network. The commands may, for example, comprise $P_{TU}^{load}$, so that an individual TU may interpret $P_{TU}^{load}$ to implement intended charging or discharging schedule.

According to an alternative embodiment, the commands may, for example, comprise operational instructions for the TU that cause the TU to charge or discharge in such a way that $P_{TU}^{load}$ is implemented.

$$P_{TU}^{load}(t) = P_{TU}^{prog}(t) \qquad \forall t = [t_0^{FL}, ..., t_{end}^{FL}] \qquad (23)$$

Computation of $P_{best\ effort}$

In some operational situations, the overall power schedule can differ from the deaggregated charging schedules. According to an embodiment, an adjustment of the aggregated operational envelope may be performed in a contiguously underlying aggregation level.

According to an embodiment, boundaries of one or more operational envelopes of one or more TUs in a contiguously underlying aggregation level are adjusted in such a way that the requirements of all TUs are met. The aggregated power limits $P_{min,agg}^{SoC}$ and $P_{max,agg}^{SoC}$ are adjusted dependent on the best possible aggregated charging schedule ($P_{best\ effort}$), (where best possible refers to the summed actual power schedules for a set of TUs which is as good as possible based on the aggregated target power schedule). In other words, the best possible aggregated charging schedule is the best possible charging schedule depending on the TUs on site. $P_{best\ effort}$ is calculated from the aggregation of the individual charging schedules ( $P_{TU}^{load}$ ) of the M TUs, as provided by expression (24):

$$P_{best\ effort} = \sum_{TU=1}^{M} P_{TU}^{load}(t) \qquad \forall m = 1, \dots, M \quad \forall t = [t_0^{FL}, \dots, t_{end}^{FL}] \qquad (24)$$

According to an embodiment, the power limits are adjusted for future points in time from $t = t_1$ to $t = t_{adj}$. The adjustment is not carried out for the current point in time $t = t_0$, as the limit adjustment has no influence on the already valid aggregated power. For the adjustment, the $P_{best\ effort}$ and the $P_{agg}^{schedule}$ are compared and, if there is a difference, the $P_{max,agg}^{SoC}$ or $P_{min,agg}^{SoC}$ is adjusted according to expression (25) or expression (26):

$$\text{If } P_{best\ effort}(t_n) < P_{agg}^{schedule}(t_n): \rightarrow P_{max,agg}^{SoC}(t_n) = P_{best\ effort}(t_n) \qquad (25)$$

$$\text{If } P_{best\ effort}(t_n) > P_{agg}^{schedule}(t_n): \rightarrow P_{min,agg}^{SoC}(t_n) = P_{best\ effort}(t_n) \qquad (26)$$

This approach enables the effective power limits of an individual TU (physical or logical) to be followed at an arbitrary aggregation level. Therefore, power limits at balancing group level (representing the power limits of virtual battery) are changed.

According to an embodiment, a change in computed or recomputed power limits of the operational envelope at the balancing group level causes a command to be issued to an energy allocation mechanism 20 so that energy is acquired from an energy grid at relevant time slots for distribution to a set of TUs in order to fulfil the time series $P_{max,agg}^{SoC}$ and $P_{min,agg}^{SoC}$ of the operational envelope at the balancing group level.

Alternatively, or in addition, a change in computed or recomputed power limits of the operational envelope at the balancing group level cause a command to be issued to an energy allocation mechanism 20 so that energy is distributed from a set of TUs to an energy grid relevant time slots in order to fulfil the time series $P_{max,agg}^{SoC}$ and $P_{min,agg}^{SoC}$ of the balancing group level.

Frequency Containment Reserve (FCR)

An energy grid performs continuous corrections of voltage, frequency and power load to secure the integrity of the power supply. Such adjustments are referred to as system services, also called ancillary services. Ancillary services are coordinated by an ancillary services allocator, which may, for example, monitor the grid for potential deviations in grid frequency, and instruct the application of ancillary power to the grid to restore the grid frequency. Industry standards distinguish between four types of system services: voltage maintenance, restoration of supply, operational management, and frequency control.

The aggregation and deaggregation and techniques discussed previously in the specification permit the energy reserves in a set of TUs to be used for ancillary services allocator. In an embodiment, ancillary services allocation may be via an ancillary energy allocator 23 which may be an extension of the energy allocation mechanism 20, or be independent.

For example, frequency control in the form of providing a frequency containment reserve can be provided by a set of TUs. A frequency containment reserve reacts to frequency fluctuations in the grid, typically within seconds. A frequency containment reserve reacts to frequency fluctuations in a grid by feeding energy into, or drawing energy out of, the grid as required. Standardisation in relevant countries defines standards for providing frequency containment reserve. For example, in Germany, six timeslots of four hours per day are prescribed, starting from midnight. At 9 AM, the necessary frequent containment reserve for the upcoming day is issued to potential suppliers of FCR energy. Provision of frequency containment reserve may be negotiated and allocated at a specific energy allocation mechanism 20, such as an energy market.

A set of aggregated TUs described by an operational envelope described previously in the specification can be used to provide frequency containment reserve. In brief, the provision of frequency containment reserve can be interpreted as allocating portions of the aggregated operational envelope in between the minimum $E_{min}(t)$ and maximum $E_{max}(t)$ energy curves of the operational envelope for frequency containment operations.

An example set of FCR prequalification rules for Germany in the publication "Prequalification Process for Balancing Service Providers (FCR, aFRR, mFRR) in Germany ("PQ conditions")", version 1.05, dated 5 July 2024 published by the German transmission system operators, which is hereby incorporated by reference. The publication is published at https://www.regelleistung.net/.

According to an embodiment, in the operational envelope of a plurality of aggregated TUs, FCR can be provided by reserving FCR power demanded by an energy allocation mechanism 20. Energy limits of the operational envelope are adjusted during the time reserved by the energy allocation mechanism 20. According to an embodiment, frequency-control is realised with a real-time controller (such as a programmer logic controller) that could, for example, be included as part of a programmable logic controller 40 configured to operably couple the TUs and the energy grid.

There now follow example embodiments concerning how to integrate frequency containment reserve into the aggregated operational envelope of the present specification.

According to an embodiment, there is provided receiving, from an ancillary services allocator 23, a reservation of future power that can be provided by the set of technical units based on an aggregated power margin time series;

distributing the power defined by the reservation in the aggregated power margin time series across at least one technical unit in the set of technical units according to the operational envelope of each TU of the set of technical units; and

updating the operational envelope for each TU of the set of technical units to reflect the reduced storage capacity and power limits for any other purpose but the ancillary services after the distribution.

In general, the approach followed is to calculate, for a plurality or all TUs, for example at the lowest aggregation level L1, the maximum power $P_{max,TU}$ available for FCR. $P_{max,TU}$ is aggregated according to the aggregation approach exemplified previously in this specification.

The aggregated $P_{max,TU}$ is provided to an energy allocation mechanism 20. $P_{max,TU}$ is the aggregated power margin time series. At an appointed time, the energy allocation mechanism 20 may return a specification of FCR occupied slots at future slot times. The energy allocation mechanism 20 may reserve power and energy demand in the operational envelope of the plurality of TUs, for example at the lowest aggregation level L1 for the future slot times. Deaggregation of the regions of the operational envelope reserved for FCR operations results in a plurality of commands to the plurality, or all, TUs for example at the lowest aggregation level L1, for implementing FCR according to the portion of the operational envelope at the balancing group level defined by the energy allocation mechanism 20.

Restrictions for FCR

To calculate the primary control power limit $P_{max,\mathbf{TU}}$, a desired storage ratio $SV_{\mathbf{TU}}$ is set to be a lower bound as in expression (27)

$$SV_{\mathbf{TU}} = C_{max,\mathbf{TU}}/P_{max,\mathbf{TU}} \qquad (27)$$

Typically, the storage ratio is a consequence of hardware specification of one or more physical TUs. In the example of electric vehicles, the integration of mobile batteries which are only intermittently connected to the grid must be considered. The storage ratio may be defined as a hard limit for the calculation of $P_{max,\mathbf{TU}}$ as a time series. The storage ratio may define an allowed energy corridor at the beginning of an FCR via an operating range. An example of an operating range is as illustrated on page 67 of version 1.05 of the ("PQ conditions") document hereby incorporated by reference.

For example, according to the "PQ conditions", if the ratio is set to be $SV_{\mathbf{TU}} > 1.25$ the allowed state of charge of a respective TU at the beginning of an FCR period must be in the range 20% to 80% state of charge.

Knowing the storage ratio, the maximum marketable power $P_{VL,max,\mathbf{TU}}$ is calculated using $P_{max,\mathbf{TU}}$ for each relevant time interval (slot) of a following predetermined period, such as a day.

According to an example, another requirement is the consideration of the prequalification condition. If the frequency containment reserve is fully utilized, 25% of the resolvable output should still be available for balancing energy operations. This means that the maximum energy output should, for example, be 25% higher of the resolvable output for frequency containment reserve operations.

$$P_{max,\mathbf{TU}} \geq P_{VL,max,\mathbf{TU}} * 1.25 \qquad (28)$$

Calculation of the maximal marketable power

According to an embodiment, the buffer for balancing energy operations can be incorporated into the computation of $P_{VL,max,TU}$. According to an embodiment, the computation of $P_{VL,max,TU}$ as performed for each TU (physical or logical), and for each predetermined time period (such as a slot, more specifically a 4 hour slot) of an upcoming FCR period (such as a day). In this example, the minimum symmetrical charging and discharging power is considered for a respective predetermined time period (such as a slot, more specifically a 4 hour slot). This is computed as follows:
For the calculation of the maximum and minimum charging and discharging power for a predetermined time period (such as a slot, more specifically a 4 hour slot):

$$P_{charge,TU} = \min\left(P_{max,TU}^{SoC}(t)\right) \forall t = [t_{start}^{\text{FL}}, ..., t_{end}^{FL}] \qquad (29)$$

$$P_{discharge,TU} = \max\left(P_{min,TU}^{SoC}(t)\right) \forall t = [t_{start}^{\text{FL}}, ..., t_{end}^{FL}] \qquad (30)$$

According to the above expressions, $t_{start}^{\text{FL}}$ is the start of a slot and $t_{end}^{FL}$ is the end of a slot. The symmetrical charging and discharging power is calculated according to expression (31):

$$P_{max,TU} = \min(P_{VL,charge,TU}, |P_{VL,discharge,TU}|) \qquad (31)$$

The aforementioned prequalification condition is applied according to expression (32):

$$P_{VL,max,TU} = P_{max,TU}/1.25 \qquad (32)$$

The maximum energy $E_{max,TU}^{PRL}$ is calculated using the nominal capacity $C_{nom,TU}$ of a respective TU, the minimal energy level $E_{min,TU}(t)$ of a respective TU, and optionally a predetermined energy buffer $E_{buffer}$. The minimal energy level $E_{min,TU}(t)$ of a respective TU is obtained from the previously computed operational envelope of the respective TU.

$$E_{max,TU}^{PRL} = \min\left(\left(C_{nom,TU}(t) - E_{buffer}\right) - \left(E_{min,TU}(t) + E_{buffer}\right)\right) \qquad (33)$$

$$\forall t = [t_{start}^{\text{FL}}, ..., t_{end}^{FL}]$$

The maximum energy and storage ratio in the maximum allocatable is computed as given by expression (34):

$$P_{VL,max,TU}' = \min\left(P_{VL,max,TU}, \frac{E_{max,TU}^{PRL}}{SV}\right) \qquad (34)$$

The remaining charging power $P_{remain,TU}^{SoC}$ of a respective TU is computed as given by expression (35):

$$P_{remain,TU}^{SoC} = P_{max,TU}^{SoC} - P_{VL,max,TU}' \qquad (35)$$

According to an embodiment, a comparison is made to check whether, or not, the adjusted charging power is sufficient to comply with the minimal energy requirements of respective TU for an entire slot (for example, four hours). To perform this comparison, a minimal energy level at the end of a four hour slot must be fulfilled by the maximum energy level at the beginning of the four hour slot.
**Fig. 13** schematically illustrates computation of frequency containment reserve.
In particular, **Fig. 13**, shows an example of an operational envelope for a TU during an FCR operation. It shows relevant graph traces for computing and checking the resulting loading performance.
According to an embodiment, if the minimum energy requirement for a respective TU cannot be fulfilled,

$P'_{VL,max,\text{TU}}$ is reduced to fulfill the following equation.

$$E_{min,TU}(t_{end}^{FL}) \leq E_{\max,TU}(t_{start}^{\text{FL}}) + P_{remain,TU}^{SoC} * 4h \qquad (36)$$

According to an embodiment, in preparation for computation of the allocatable power, $P'_{VL,max,TU}$ is computed for all TUs in the set of M TUs to be used for FCR operations and then aggregated.

$$P_{VL,agg}(t) = \sum_{TU = 1}^{M} P'_{VL,max,TU} \; \forall \text{t} = [t_{start}^{\text{FL}}, ..., t_{end}^{FL}] \qquad (37)$$

Integration of FCR into operational envelope

The previous section described how the set of TUs participating in FCR operations can aggregate an amount of allocatable power for use in FCR operations. According to an embodiment, the allocatable power is aggregated up to the balancing group level. The allocatable power is communicated to a FCR allocation mechanism 23. After a predetermined delay, the FCR allocation mechanism 23 communicates a reserved power for a given timeframe to a controller associated with the set of TUs participating in FCR operations.

For example, the allocation in respect of FCR operations in the operational envelope of the balancing group and/or of each TU is comparable to the function of the energy allocation mechanism 20, although instead a reservation in the operational envelope is made in respect of a possible future claim on stored energy in one or more TUs.

According to an embodiment, the power reservation obtained by the controller from the FCR allocation mechanism 23 is deaggregated to the physical TU level (for example, to L1 of the aggregation hierarchy).

The operation of frequency containment reserve is now divided into two steps.

According to a first step, the allocated power reserve is deaggregated according to the techniques discussed previously in the specification, and is therefore distributed among the individual TUs. According to an embodiment, this is achieved by a controller associated with a set of TUs involved in FCR operations generating a plurality of commands for a corresponding set of TUs. Each command comprises a reservation in the operational envelope of a respective TU for FCR operations at a specific time slot.

According to a second step, the controller, or a TU, calculates an update to the operational envelope for a respective TU taking into account new power limits and the resulting energy limits as a result of that respective TUs participation in FCR operations defined by the FCR allocation mechanism 23.

Deaggregation of the FCR Power

According to an embodiment, following computations are carried out for each predetermined time slot (for example, a four hour timeslot) to compute a distribution of the allocated aggregated $P_{VL,agg}^{schedule}$. For example, $P_{VL,agg}^{schedule} \leq P_{VL,agg}$ holds by definition. According to an embodiment, the distribution of the FCR power between physical TUs may be achieved by sharing the FCR power between all TUs.

According to another embodiment, the distribution of the FCR power between physical TUs may be achieved by allocating the FCR power according to a predetermined distribution key which may, for example, be related to the availability of individual TU, or be related to physical characteristics of an individual TU such as battery size or type. In the following discussion, distribution of the FCR power between physical TUs by sharing the FCR power between all TUs is exemplified.

According to an embodiment, the maximum marketable FCR of a respective TU $P'_{VL,max,\text{TU}}$ is used as reserved FCR for the respective TU:

$$P_{FCR,TU} = P'_{VL,max,TU} \qquad (38)$$

According to an embodiment, the remaining FCR power $P_{VL,agg,remainder}$ to be distributed is calculated:

$$P_{VL,agg,remainder}(t) = P_{VL,agg}^{schedule}(t) - P_{FCR,TU} \quad \forall t = [t_{start}^{\text{FL}}, \dots, t_{end}^{FL}] \qquad (39)$$

According to an embodiment, the remaining allocated FCR capacity is overwritten with the aggregated allocated FCR capacity:

$$P_{VL,agg}^{schedule}(t) = P_{VL,agg,remainder}(t) \qquad \forall t = [t_{start}^{\text{FL}}, \dots, t_{end}^{FL}] \qquad (40)$$

The computations of expressions (38), (39), and (40) repeated until all allocated FCR power is distributed. If all allocated FCR power has been distributed, then other TUs in the set of TUs participating in FCR are not considered. For example, the final TU could have only sure of the maximum possible FCR power, such that:

$$P_{FCR,TU} < P'_{VL,max,TU} \qquad (41)$$

Restrict power and energy limits in operational envelope for FCR slots

According to a first step, the maximum and minimum power limits to change state of charge of a TU is modified for one or more slots for which a respective TU has reserved FCR power. According to an embodiment, a prequalification condition with a predetermined factor (in this example 1.25) is also taken into account.

$$P_{max,TU,FCR}^{SoC}(t) = P_{max,TU}^{SoC}(t) - P_{FCR,TU}(t) * 1,25 \qquad \forall t = [t_{start}^{\text{FL}}, \dots, t_{end}^{FL}] \qquad (42)$$

$$P_{min,TU,FCR}^{SoC}(t) = P_{min,TU}^{SoC}(t) + P_{FCR,TU}(t) * 1,25 \qquad \forall t = [t_{start}^{\text{FL}}, \dots, t_{end}^{FL}] \qquad (43)$$

According to an embodiment, the remaining power of a respective TU can be used within the host system of the TU (for example, for operating electric vehicle) or can be allocated via the energy allocation mechanism 20 as part of a virtual battery.

According to embodiment, an upper load limit $SoC_{upper}$ for the beginning of an FCR slot is computed accounting for the prequalification condition with a predetermined factor as a margin. In the following example, the predetermined margin is 0.25, but the predetermined factor may be selected from a range of suitable values.

$$SoC_{upper}[\%] = \frac{E_{used}(t) - 0,25 * P_{FCR,TU}(t)}{E_{used}(t)} \qquad \forall t = [t_{start}^{\text{FL}}, \dots, t_{end}^{FL}] \qquad (44)$$

It follows that:

$$SoC_{upper}[\%] = 1 - 0,25/SV \qquad (45)$$

According to an embodiment, a lower load limit $SoC_{under}$ for the beginning of an FCR slot is computed accounting for the prequalification condition with a predetermined factor as a margin:

$$SoC_{under}[\%] = \frac{0,25 * P_{FCR,TU}(t)}{E_{used}(t)} \qquad \forall t = [t_{start}^{\text{FL}}, \dots, t_{end}^{FL}] \qquad (46)$$

$$SoC_{under}[\%] = 0,25/SV \qquad (47)$$

According to an embodiment, the operational envelope of each TU in the set of TUs providing FCR power is changed using the percentage buffer calculated to fulfil the predetermined prequalification requirements. According to an embodiment, the recomputed operational envelope may be calculated in respect of all FCR timeslots and/or in respect of all TUs for a predetermined future time period, such as the next day.

$$\Delta E_{upper} = (1 - SoC_{upper}[\%]) * E_{used} = \frac{0,25}{SV} * E_{used} = 0,25h * P_{FCR,\textbf{TU}} \qquad (48)$$

$$\Delta E_{under} = SoC_{upper}[\%] * E_{used} = \frac{0,25}{SV} * E_{used} = 0,25h * P_{FCR,used} \qquad (49)$$

$$E_{max,\textbf{TU},FCR}(t_{start}^{\text{FL}}) = E_{max,\textbf{TU}}(t_{start}^{\text{FL}}) - \Delta E_{upper} \qquad (50)$$

$$E_{min,\textbf{TU},FCR}(t_{start}^{\text{FL}}) = E_{min,\textbf{TU}}(t_{start}^{\text{FL}}) + \Delta E_{under} \qquad (51)$$

The aforementioned embodiments enable arbitrarily configurable sets of TUs to participate in FCR operations while still maintaining power margin for the primary tasks of the TUs.

Integration Bidirectionality

**Fig. 14** schematically illustrates a system for bidirectional energy transfer.

Like reference numerals from **Fig. 1** have the same meaning and function as described in relation to **Fig. 1.**

The system for bidirectional energy transfer of **Fig. 14** further comprises one or more programmable logic controllers 40 associated with corresponding technical units TU and/or aggregated technical units. The programmable logic controller 40 is configured to host a controlling unit 34 configured, an example, to operate frequency containment reserve logic 26. The programmable logic controller 40 is, for example, configured to measure the electrical energy characteristics such as voltage, current and frequency anomaly of the feed of the technical units TU and/or aggregated technical units to the electrical grid 12. The programmable logic controller 40 is, for example, configured to communicate the measured voltage current and frequency anomalies to one or more of the grid controller 14, controller 22, frequency containment reserve logic 30 of the controller 22, and the like.

Bidirectional TUs are considered to be those which contain a storage unit that can withdraw electrical energy from the power grid, and also feed electrical energy into a power grid. TUs participating in bidirectional energy operations are connected to the electrical grid using one or more corresponding programmable logic controller 40 installed between corresponding TUs and grid connection points of the TUs. Each programmable logic controller 40 is communicably coupled to a control system of a grid operator. The one or more programmable logic controller 40 is/are configured to limit the feeling of a corresponding TU according to arbitrary grid operator technical requirements.

According to embodiments, a method of deaggregation according to previously described embodiments in this specification is extended to enable the limitation of feed-in power by a grid operator.

In general terms, the method of deaggregation extended to enable the limitation of feed-in power is defined by the following statement:

According to an embodiment, the method further comprises:

receiving, from an energy network operator, a feed-in reduction command;

recomputing the plurality of load schedules ( $\dot{P}_{TU}^{load}(t)$ ) each corresponding to a respective technical unit of the set of technical units according to the feed-in reduction command, wherein the recomputing comprises:

for each technical unit of the set of technical units, determining a buffer between a minimum energy requirement of a respective technical unit, and a current energy level of the respective technical unit;
sorting each technical unit of the set of technical units according to the determined buffers;
calculating a limitation of a respective technical unit in descending order of the size of the determined buffer; and
updating the plurality of load schedules according to the calculated limitations.

Accordingly, when a grid operator communicates a feed-in reduction command to a local programmable logic controller 40 located of an aggregated sub-level (in other words, not at the balancing group or virtual battery level), the feed in reduction command should be deaggregated into new power targets for corresponding TUs at lower aggregation levels.

Therefore, the one or more a feed-in reduction commands communicated to a local programmable logic controller 40 of an aggregated sub-level is used to provide a weighting in the operational envelope of each TU according to a buffer of the lower limit $E_{min,\textbf{TU}}$ of each TU.

According to an embodiment, this technique is applied to each TU falling hierarchically underneath a local programmable logic controller 40 in the aggregation hierarchy. This group of TUs is referred to as a relevant TU in the following description.

According to an embodiment, the weighting in the operational envelope of each TU is performed at a current point in time ($t = t_0$). A feed-in restriction is a temporary limit that needs to be complied with as quickly as possible.

According to an embodiment, the computation uses $E_{SoC,\mathbf{TU}}$, $E_{min,\mathbf{TU}}$, and the charging schedule ($'P_{\mathbf{TU}}^{load}$) for each relevant TU.

According to an embodiment, a step of preparation is performed by determining a required size of a buffer to a lower limit of $E_{min,\mathbf{TU}}$ for each TU. As an example, the step of preparation comprises, for each relevant TU, computing the difference between $E_{SoC,\mathbf{TU}}$ and $E_{min,\mathbf{TU}}$ for all TUs resulting in the energy buffer ($E_{\mathbf{TU}}^{buffer}$):

$$E_{\mathbf{TU}}^{buffer} = E_{SoC,\mathbf{TU}} - E_{min,\mathbf{TU}} \qquad (53)$$

According to an embodiment, the total energy Delta $E_{agg}^{buffer}$ is determined:

$$E_{agg}^{buffer} = \sum_{\mathbf{TU}=1}^{M} E_{\mathbf{TU}}^{buffer}(t) \qquad \forall m = 1, \dots, M \qquad (54)$$

According to an embodiment, each relevant TU is sorted according to the size of the energy buffer determined in descending order. The sorting determines which of the relevant TUs has the highest buffer and will experience the highest share of the limitation defined by the grid limitation command.

According to an embodiment, the difference $P_{agg}^{\Delta}$ between the limited aggregated power value $P_{grid}$ communicated from the grid operator and the aggregated target schedule of the deaggregation ($'P_{agg}^{load}$) is calculated:

$$P_{agg}^{load} = \sum_{\mathbf{TU}=1}^{M} P_{\mathbf{TU}}^{load}(t) \qquad \forall m = 1, \dots, M \qquad (55)$$

According to an embodiment, each relevant TU is then limited. For example, the TU with the highest buffer is started in descending order and is thus limited to the greatest extent. This involves iterating through all relevant TUs until each relevant TU has been adjusted. In other words, according to this embodiment the TU having the smallest buffer experiences the smallest power limitation. A skilled person will appreciate that other TU limitation strategies are possible. For example, a TU with higher availability according to an availability schedule may be assigned a higher amount of the limitation. An availability schedule is, for example, derivable from a bus timetable in the case of an electric bus.

$$P_{agg}^{buffer} = P_{agg}^{load} - P_{grid} \qquad (56)$$

The following exemplary pseudocode illustrates an exemplary calculation of limitations for relevant TUs following the issuance by a grid operator of a limitation command:

| Calculating the TU limitation |
|---|
| 1. **Begin** |
| 2. Determine a ratio factor for the limited power: $$factor = E_{TU}^{\text{buffer}} / E_{agg}^{\text{buffer}}$$ |
| 3. Determine the power reduction for the TU: $$P_{reduction}^{\text{buffer}} = P_{agg}^{\text{buffer}} * factor$$ |
| 4. Calculation of the adjusted load power for the TU with the initial power ($P_{TU}^{load}$), the $P_{reduction}^{\text{buffer}}$ and the limitation from the flex space: $$P_{TU}^{\text{load,adjust}} = \max(\min(P_{TU}^{\text{load}} - P_{reduction}^{\text{buffer}}, P_{max,TU}^{SoC}), P_{min,TU}^{SoC})$$ |
| 5. Determine the remaining power buffer ($P_{remainder}^{\text{buffer}}$) for the remaining TUs: $$P_{remainder}^{\text{buffer}} = P_{agg}^{\text{buffer}} - P_{TU}^{\text{load,adjust}}$$ |
| 6. Determine the remaining energy buffer ($E_{remainder}^{\text{buffer}}$) for the remaining TUs: $$E_{remainder}^{\text{buffer}} = E_{agg}^{\text{buffer}} - E_{TU}^{\text{buffer}}$$ |
| 7. The $E_{remainder}^{\text{buffer}}$ is used for the next iteration as the $E_{agg}^{\text{buffer}}$: $$E_{agg}^{\text{buffer}} = E_{remainder}^{\text{buffer}}$$ |
| 8. Iterate for all TUs. |

| |
|---|
| 9. **End.** |

According to an embodiment, after each calculation, all relevant asset, the $E_{agg}^{\text{buffer}}$ decreases until every TU has been accounted for (adjusted). At the end of the computation, the adjusted $P_{TU}^{\text{load,adjust}}$ is written into the power schedule of the relevant TU at the position of the current time ($t = t_0$). According to an embodiment, the updated power schedule is used to control power consumption of the TU, or to generate control commands to control power consumption of the TU. Thus, the adjusted power schedule $P_{TU}^{\text{load,adjust}}$ is propagated to further relevant TUs in the aggregation hierarchy.

According to embodiments discussed previously, operational envelopes defining TUs can be used to allocate buffer across a set of TUs when a feed-in limitation command is received from a grid operator.

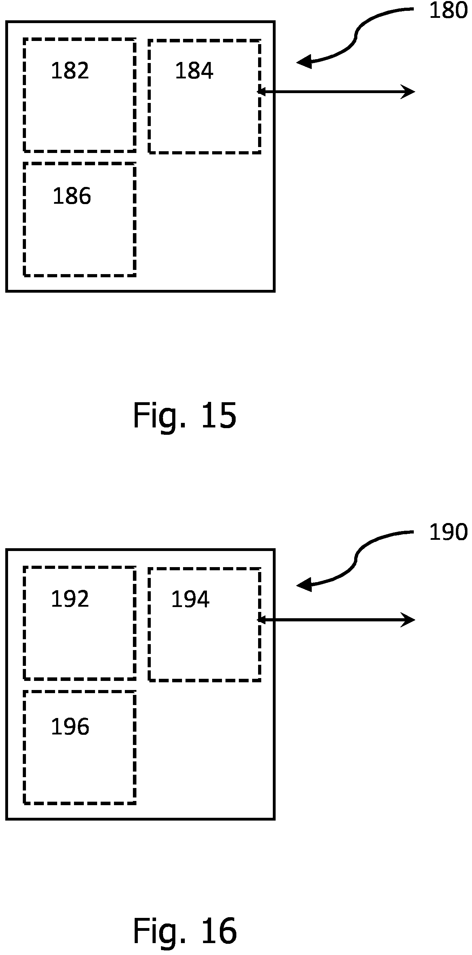

**Fig. 15** schematically illustrates an aggregation apparatus.

According to a third aspect, there is provided an apparatus 180 for obtaining an operational envelope of electrical energy provision relating to at least one set of technical units, the apparatus comprising a communications 182 interface, a memory 184, and a processor 186.

The communications interface 182 is configured to obtain (i) a charging schedule, $t_{start}^{CR}$, $t_{end}^{CR}$, characterizing a plurality of charging opportunities of the technical unit, (ii) a maximum power time series, $P_{max}(t)$, defining a capability of each technical unit to charge, and (iii) a minimum power time series, $P_{min}(t)$, defining a capability of each technical unit to discharge;

The processor 186 is configured to compute, for each technical unit, (iv) a minimum energy time series, $E_{min}(t)$, characterizing a minimum energy requirement of the respective technical unit over time, wherein the minimum energy time series, $E_{min}(t)$, is computed by applying a first charging power from a first predetermined time of the respective charging opportunity beginning with a final charging opportunity of the charging schedule and proceeding backwards in the charging schedule to a first charging opportunity.

The processor 186 is configured to compute, for each technical unit, (v) a maximum energy time series, $E_{max}(t)$ characterizing an upper energy limit of the respective technical unit over time, wherein the maximum energy time series is computed by applying a second charging power from a second predetermined time of the respective charging opportunity beginning with the first charging opportunity of the charging schedule and proceeding forwards in the charging schedule.

The processor 186 is configured to compute, for each technical unit, (vi) a minimum energy change time series, $E_{\Delta min}(t)$, characterising a change of the minimum energy time series resulting from the charging schedule, and to compute (vii) a maximum energy change time, $E_{\Delta max}(t)$, series characterising a change of the maximum energy time series resulting from the charging schedule, wherein the time series (ii) to (vii) define an operational envelope of a respective technical unit.

The processor 186 is configured to compute an operational envelope for the set of technical units by summing, for all technical units in the set of technical units, each type of time series with corresponding time series of the same type, wherein the operational envelope characterises the energy level within the set of technical units as a function of time.

The communications interface 182 is configured to output the operational envelope of the set of technical units.

According to an example, the apparatus 180 is a personal computer (PC), or a server, an embedded controller, or a programmable logic controller.

According to an example, the communications interface 182 may be an ethernet interface operable to communicably couple the apparatus 180 to a Local Area Network (LAN), a Wide Area Network (WAN), a cellular network (such as 4G, 5G, or 6G), or another wired or wireless network.

According to an example, memory 184 may include, for example, volatile memory such as random access memory, RAM. The memory 184 may also comprise read-only memory, ROM, EEPROM, and persistent memory such as a hard drive or solid-state disk.

According to an example, processor 186 may comprise at least one processor, such as a central processing unit or embedded processor. The at least one processor is capable hosting a data processing system that provides can instantiate and operate a logical environment 70. The processor 186 may also comprise a multiprocessor cluster, and can comprise a heterogenous mixture of different types of processors such as graphical processing units. Examples of operating systems that maybe executed by the processor to provide the data processing system are Microsoft Windows (TM), Linux (TM), Unix, iOS, or Android.

The data processing system may comprise one or more virtual machines such as VMware or Microsoft Hyper-V. The methods according to the first and second aspect may, for example, be executed in such virtual machines. In examples, the methods according to the first and second aspect may be implemented on a cloud computing service.

Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

**Fig. 16** schematically illustrates a deaggregation apparatus.

According to a fourth aspect, there is provided an apparatus 190 for controlling the distribution of electrical energy within a set of technical units, wherein the apparatus comprises a communications interface 192, a memory 194, and a processor 196.

The communications interface 192 is configured to obtain an aggregated target power schedule, $P_{agg}^{schedule}$, defining a target power output for a set of technical units, TU and an operational envelope, OE, for each technical unit of the set of technical units, TU.

The processor 196 is configured to compute, for each technical unit, TU, of the set of technical units, a minimum power schedule, $P_{TU}^{desired}$, using the corresponding operational envelope, OE, of each technical unit, based on a rule that charging of each technical unit occurs when a predicted state of charge of a technical unit reaches a predetermined state of charge of the respective technical unit.

The processor 196 is configured to compute an aggregation of the minimum power schedule, $P_{TU}^{desired}$, of each technical unit of the set of technical units to form an aggregated minimum power schedule, $P_{agg}^{desired}(t)$.

The processor 196 is configured to determine, using the aggregated target power schedule, $P_{agg}^{schedule}$, and the aggregated minimum power schedule, $P_{agg}^{desired}(t)$, a delta schedule, $P_{TU}^{delta}(t)$, per technical unit, TU, wherein the delta schedule characterises a power surplus or power shortfall for each technical unit, TU, of the set of technical units.

The processor 196 is configured to compute a distribution of the power represented by the delta schedule amongst the set of technical units as a load schedule, $P_{TU}^{load}(t)$, of each technical unit, TU, wherein computing the distribution comprises:

for each technical unit, TU, in the set of technical units:

allocating a first portion of power represented by the delta schedule, $P_{TU}^{delta}(t)$, to each technical unit, TU, in the set of technical units;

aggregating each of the energy, $E_{min}$, $E_{max}$, and power, $P_{min}$, $P_{max}$, corridors comprised in operational envelopes of the remaining technical units in the set of technical units to which no allocation from the delta schedule, $P_{TU}^{delta}(t)$, has been made;

verifying that an unallocated power delta, represented by a second portion of the delta schedule, $P_{remainder}^{delta}$, can be distributed to the remaining technical units, TU; and

if the power represented by the second portion of the delta schedule, $P_{remainder}^{delta}$, can be distributed to the remaining technical units:

designating the minimum power schedule, $P_{TU}^{desired}$, and the first portion of the delta schedule, $P_{TU}^{delta}(t)$, as a load schedule, $P_{TU}^{load}(t)$, to each technical unit, TU.

The processor is configured to generate at least one control command for controlling at least one technical unit of the set of technical units according to the corresponding load schedule, $P_{TU}^{load}(t)$, for each technical unit.

A skilled person will appreciate that the apparatus according to the fourth aspect may be of the same, or a similar form as previously described in relation to the third aspect.

According to an embodiment, an apparatus configured to perform the methods of the first and second aspects, or any embodiments of the first and second aspects as described herein, is provided.

According to a fifth aspect, there is provided a system 10a, 10b for controlling the distribution of electrical energy within a set of technical units comprising:

- an electrical energy distribution grid 12 communicably coupled to a grid controller 14 and electrically;
- at least one set of technical units electrically connected to the electrical energy distribution grid 12; and
- a first apparatus for controlling the distribution of electrical energy within a set of technical units according to the third aspect, wherein the first apparatus is communicably coupled to the at least one set of technical units and the grid controller, and/or a second apparatus for obtaining an operational envelope of electrical energy provision relating to at least one set of technical units according to the fourth aspect, wherein the second apparatus is communicably coupled to the first apparatus and/or the grid controller.

**Figs. 1** and **14** illustrate exemplary systems according to the fifth aspect.

According to a sixth aspect, there is provided a computer program element comprising machine readable instructions which, when executed, cause a computer to execute the methods according to the first and/or second aspects discussed herein, or their dependent embodiments.

According to a seventh aspect, there is provided a non-transitory computer readable medium comprising the machine readable instructions according to the sixth aspect.

According to an eighth aspect, there is provided a method for operating an electrical energy supply system comprising performing the method according to the first aspect, and then performing the method according to the second aspect.

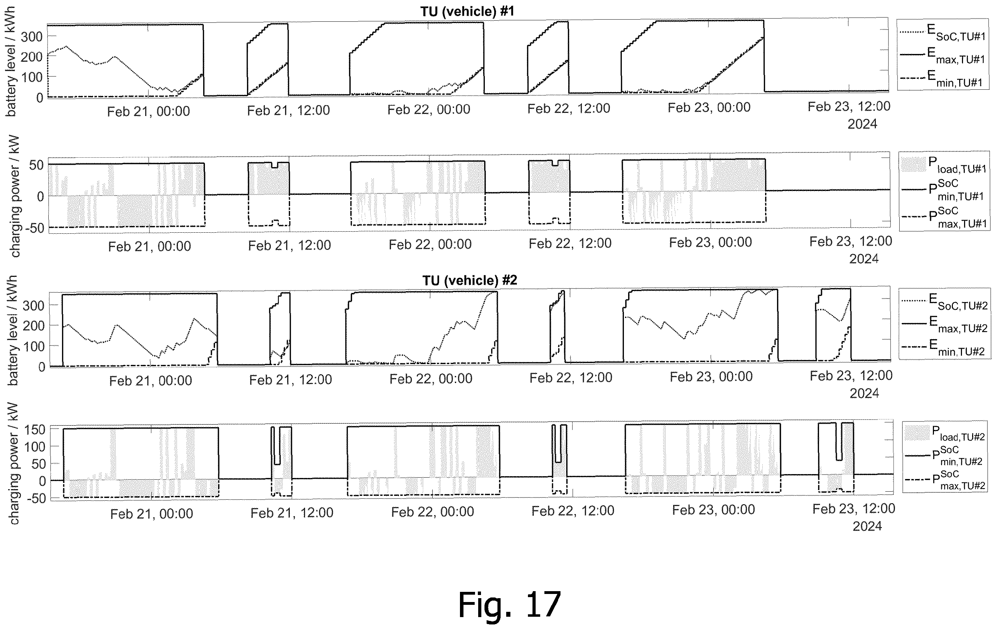

**Fig. 17** schematically illustrates simulated power and energy corridors of two vehicles and a corresponding state of charge estimate according to a realistic usage scenario.

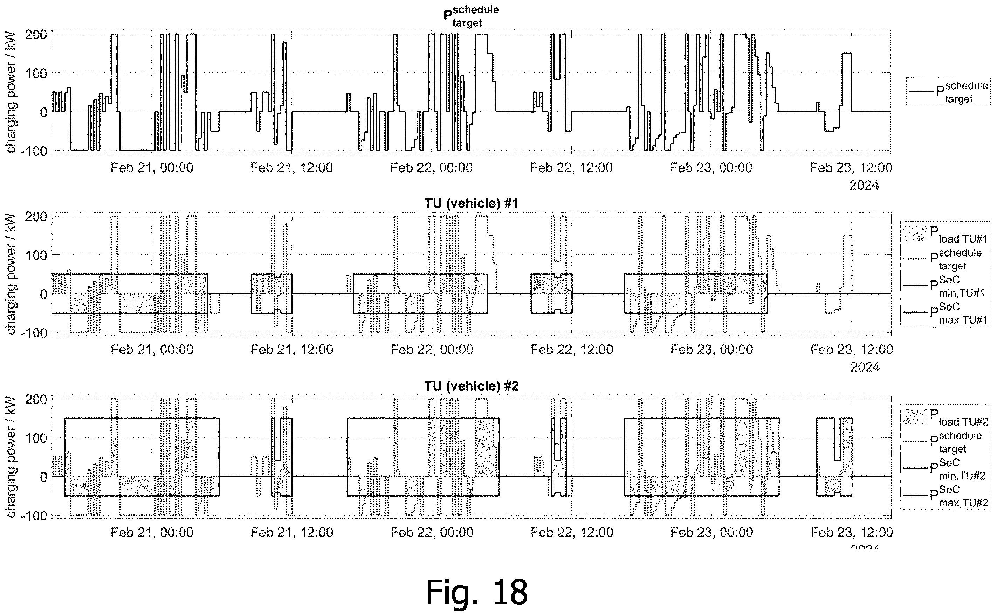

**Fig. 18** schematically illustrates a simulation of a deaggregation of the aggregated operational envelope of two electric vehicles, according to a realistic usage scenario.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

**Claims**

1. A computer-implemented method (150) for controlling the distribution of electrical energy to a set of technical units, the method comprising:

obtaining (151) an aggregated target power schedule, $P_{agg}^{schedule}(t)$, defining a target power output for a set of technical units, TU;

obtaining (152) an operational envelope, OE, for each technical unit of the set of technical units, TU;

computing (153), for each technical unit, TU, of the set of technical units, a minimum power schedule, $P_{TU}^{desired}(t)$, using the corresponding operational envelope, OE, of each technical unit, based on a rule that charging of each technical unit occurs when a predicted state of charge of a technical unit reaches a predetermined state of charge of the respective technical unit;

aggregating (154) the minimum power schedule, $P_{TU}^{desired}(t)$, of each technical unit of the set of technical units to form an aggregated minimum power schedule $P_{agg}^{desired}(t)$;

determining (155), using the aggregated target power schedule, $P_{agg}^{schedule}(t)$, and the aggregated minimum power schedule, $P_{agg}^{desired}(t)$, a delta schedule, $P_{TU}^{delta}(t)$ per technical unit, TU, wherein the delta schedule characterises a power surplus or power shortfall for each technical unit, TU, of the set of technical units;

computing (156) a distribution of the power represented by the delta schedule amongst the set of technical units as a load schedule, $P_{TU}^{load}(t)$, of each technical unit, TU, wherein computing the distribution comprises:

for each technical unit, TU, in the set of technical units:

allocating (157) a first portion of power represented by the delta schedule, $P_{TU}^{delta}(t)$, to each technical unit, TU, in the set of technical units;

aggregating (158) each of the energy, $E_{min}(t)$, $E_{max}(t)$, and power, $P_{min}(t)$, $P_{max}(t)$, corridors comprised in operational envelopes of the remaining technical units in the set of technical units to which no allocation from the delta schedule, $P_{TU}^{delta}(t)$ has been made;

verifying (159) that an unallocated power delta, represented by a second portion of the delta schedule, $P_{remainder}^{delta}$, can be distributed to the remaining technical units, TU; and

if the power represented by the second portion of the delta schedule, $P_{remainder}^{delta}(t)$, can be distributed to the remaining technical units:

designating (160) the minimum power schedule $P_{TU}^{desired}(t)$, and the first portion of the delta schedule, $P_{TU}^{delta}(t)$, as a load schedule, $P_{TU}^{load}(t)$, to each technical unit, TU, and

controlling (161) at least one technical unit of the set of technical units according to the corresponding load schedule, $P_{TU}^{load}(t)$, for each technical unit.

2. The computer implemented method (150) according to claim 1,
further comprising verifying that the allocated energy represented by the sum of the minimum power schedule, $P_{TU}^{desired}(t)$, and the delta schedule, $P_{TU}^{delta}(t)$, covers a demand of a respective TU and is in accordance with the operational envelope of the respective technical unit.

3. The computer implemented method (150) according to one of claims 1 or 2,

wherein if the unallocated power delta represented by the second portion of the delta schedule, $P_{remainder}^{delta}(t)$, cannot be distributed to the remaining technical units,

the first portion of the power represented by the first portion of the delta schedule, $P_{TU}^{delta}(t)$, to each technical unit, TU, in the set of technical units is adjusted, and

the computation of the distribution of the energy represented by the second portion of the delta schedule,

$P^{delta}_{remainder}(t)$ , amongst the set of technical units is repeated.

4. The computer implemented method (150) according to one of claims 1 to 3, further comprising:

receiving, from an energy network operator, a feed-in reduction command;

recomputing the plurality of load schedules, $P^{load}_{TU}(t)$, each corresponding to a respective technical unit of the set of technical units according to the feed-in reduction command, wherein the recomputing comprises:

for each technical unit of the set of technical units, determining a buffer between a minimum energy requirement of a respective technical unit, and a current energy level of the respective technical unit; sorting each technical unit of the set of technical units according to the determined buffers; calculating a limitation of a respective technical unit in descending order of the size of the determined buffer; and

updating the plurality of load schedules, $P^{load}_{TU}(t)$ , according to the calculated limitations.

5. A computer-implemented method (100) for obtaining an operational envelope of electrical energy provision relating to at least one set of technical units, TU, the method comprising:

obtaining (102) (i) a charging schedule, $t^{CR}_{start}$, $t^{CR}_{end}$ , characterizing a plurality of charging opportunities of the technical unit, (ii) a maximum power time series, $P_{max}(t)$, defining a capability of each technical unit to charge, and (iii) a minimum power time series, $P_{min}(t)$, defining a capability of each technical unit to discharge;

for each technical unit, computing (104) (iv) a minimum energy time series, $E_{min}(t)$, characterizing a minimum energy requirement of the respective technical unit over time, wherein the minimum energy time series, $E_{min}(t)$, is computed by applying a first charging power from a first predetermined time of the respective charging opportunity beginning with a final charging opportunity of the charging schedule and proceeding backwards in the charging schedule to a first charging opportunity;

for each technical unit, computing (106) (v) a maximum energy time series, $E_{max}(t)$, characterizing an upper energy limit of the respective technical unit over time, wherein the maximum energy time series is computed by applying a second charging power from a second predetermined time of the respective charging opportunity beginning with the first charging opportunity of the charging schedule and proceeding forwards in the charging schedule;

for each technical unit, computing (108) (vi) a minimum energy change time series, $E_{\Delta min}(t)$, characterising a change of the minimum energy time series resulting from the charging schedule, and computing (vii) a maximum energy change time series, $E_{\Delta max}(t)$, characterising a change of the maximum energy time series resulting from the charging schedule, wherein the time series (ii) to (vii) define an operational envelope of a respective technical unit;

computing an operational envelope (110) for the set of technical units by summing, for all technical units in the set of technical units, each type of time series with corresponding time series of the same type, wherein the operational envelope characterises the energy level within the set of technical units as a function of time;

outputting (112) the operational envelope of the set of technical units.

6. The computer-implemented method (100) according to claim 5, wherein computing the minimum energy time series, $E_{min}(t)$, of a respective technical unit comprises:

initializing the minimum energy time series, $E_{min}(t)$, to zero; computing the maximum amount of energy that can be transferred to the technical unit during each charging opportunity; for each charging opportunity of the technical unit, beginning with the final charging opportunity of the charging schedule and iterating sequentially backwards to the first charging opportunity of the charging schedule: computing a portion of the time series representing the minimum energy time series, $E_{min}(t)$, of the respective technical unit during a charging phase of the charging opportunity, wherein: if the corresponding maximum amount of energy that can be transferred to the technical unit during the charging opportunity is less than the minimum energy that the respective technical unit should store at the end of the charging phase:

computing a transfer energy, $E_{transfer}^{CR}(t)$, representing the difference between the maximum amount of energy that can be transferred and the minimum energy that the respective unit should store in the charging opportunity; and

adding the transfer energy, $E_{transfer}^{CR}(t)$, to the minimum energy that the respective technical unit should store at the end of the next charging phase backwards in the charging schedule.

7. The computer-implemented method (100) according to claims 5 or 6, wherein computing the maximum energy time series, $E_{max}(t)$, of a respective technical unit comprises:

initializing the maximum energy time series, $E_{max}(t)$, to zero;
for each charging opportunity of the technical unit, beginning with the first charging opportunity and iterating sequentially forwards to the final charging opportunity of the charging schedule;

calculating the initial energy of the charging phase;
calculating the increase in the maximum energy time series during the charging phase; and
calculating the initial energy for a following charging opportunity.

8. The computer-implemented method (100) according to one of claims 5 to 7, wherein computing a charging schedule for the set of technical units using the operational envelope comprises:

computing an energy curve of the set of technical units defined by the operational envelope; and
allocating a state of charge of the set of technical units according to an allocation strategy; and
recomputing the charging schedule based on the allocated state of charge.

9. The computer-implemented method (100) according to one of claims 5 to 8, further comprising:

receiving, from an ancillary services allocator (23), a reservation of future power that can be provided by the set of technical units based on an aggregated power margin time series;
distributing the power defined by the reservation in the aggregated power margin time series across at least one technical unit in the set of technical units according to the operational envelope of each TU of the set of technical units; and
updating the operational envelope for each TU of the set of technical units to reflect the reduced storage capacity and power limits for any other purpose but the ancillary services after the distribution.

10. The computer-implemented method (100) according to one of claims 5 to 9, further comprising:

for each technical unit in the set of technical units, computing a time series defining a power margin, $P_{VL\_max\_TU}(t)$ of the technical unit that is available for ancillary services;
aggregating the plurality of time series, $P_{VL\_max\_TU}(t)$, defining the power margin to thus form an aggregated power margin time series; and
communicating the aggregated power margin time series to an ancillary energy allocator (23); and/or
wherein the operational envelope describes the aggregated TUs of a balancing group (BG), and wherein, after computing the operational envelope, there is further provided:
generating a charging schedule for a plurality of technical units comprised in the balancing group using the operational envelope of the balancing group.

11. The computer-implemented method according to one of claims 1 to 4 or 5 to 10, wherein the technical unit, TU, is an electrical vehicle comprising an electrical energy storage unit (50), preferably an electrical bus.

12. An apparatus (180) for obtaining an operational envelope of electrical energy provision relating to at least one set of technical units, TU, the apparatus comprising:

- a communications interface (182);
- a memory (184); and

    - a processor (186);

wherein the communications interface (182) is configured to obtain (i) a charging schedule, $t_{start}^{CR}$, $t_{end}^{CR}$, characterizing a plurality of charging opportunities of the technical unit, (ii) a maximum power time series, $P_{max}(t)$, defining a capability of each technical unit to charge, and (iii) a minimum power time series, $P_{min}(t)$, defining a capability of each technical unit to discharge;

wherein the processor (186) is configured to compute, for each technical unit, (iv) a minimum energy time series, $E_{min}(t)$, characterizing a minimum energy requirement of the respective technical unit over time, wherein the minimum energy time series, $E_{min}(t)$, is computed by applying a first charging power from a first predetermined time of the respective charging opportunity beginning with a final charging opportunity of the charging schedule and proceeding backwards in the charging schedule to a first charging opportunity;

wherein the processor (186) is configured to compute, for each technical unit, (v) a maximum energy time series, $E_{max}(t)$, characterizing an upper energy limit of the respective technical unit over time, wherein the maximum energy time series is computed by applying a second charging power from a second predetermined time of the respective charging opportunity beginning with the first charging opportunity of the charging schedule and proceeding forwards in the charging schedule;

wherein the processor (186) is configured to compute, for each technical unit, (vi) a minimum energy change time series, $E_{\Delta min}(t)$, characterising a change of the minimum energy time series resulting from the charging schedule, and to compute (vii) a maximum energy change time, $E_{\Delta max}(t)$, series characterising a change of the maximum energy time series resulting from the charging schedule, wherein the time series (ii) to (vii) define an operational envelope of a respective technical unit;

wherein the processor (186) is configured to compute an operational envelope (110) for the set of technical units by summing, for all technical units in the set of technical units, each type of time series with corresponding time series of the same type, wherein the operational envelope characterises the energy level within the set of technical units as a function of time;

wherein the communications interface (182) is configured to output the operational envelope of the set of technical units.

13. An apparatus (190) for controlling the distribution of electrical energy within a set of technical units, wherein the apparatus comprises:

- a communications interface (192);
- a memory (194); and
- a processor (196);

wherein the communications interface (192) is configured to obtain an aggregated target power schedule, $P_{agg}^{schedule}(t)$, defining a target power output for a set of technical units, TU and an operational envelope, OE, for each technical unit of the set of technical units, TU;

wherein the processor (196) is configured to compute, for each technical unit, TU, of the set of technical units, a minimum power schedule, $P_{TU}^{desired}(t)$, using the corresponding operational envelope, OE, of each technical unit, based on a rule that charging of each technical unit occurs when a predicted state of charge of a technical unit reaches a predetermined state of charge of the respective technical unit;

wherein the processor (196) is configured to compute an aggregation of the minimum power schedule, $P_{TU}^{desired}(t)$, of each technical unit of the set of technical units to form an aggregated minimum power schedule, $P_{agg}^{desired}(t)$;

wherein the processor (196) is configured to determine, using the aggregated target power schedule, $P_{agg}^{schedule}(t)$, and the aggregated minimum power schedule, $P_{agg}^{desired}(t)$, a delta schedule, $P_{TU}^{delta}(t)$, per technical unit, TU, wherein the delta schedule characterises a power surplus or power shortfall for each technical unit, TU, of the set of technical units;

wherein the processor (196) is configured to compute a distribution of the power represented by the delta schedule amongst the set of technical units as a load schedule, $P_{TU}^{load}(t)$, of each technical unit, TU, wherein computing the distribution comprises:

for each technical unit, TU, in the set of technical units:

allocating a first portion of power represented by the delta schedule, $P_{TU}^{delta}(t)$, to each technical unit, TU, in the set of technical units;

aggregating each of the energy, $E_{min}(t)$, $E_{max}(t)$, and power, $P_{min}(t)$, $P_{max}(t)$, corridors comprised in operational envelopes of the remaining technical units in the set of technical units to which no allocation from the delta schedule, $P_{TU}^{delta}(t)$, has been made;

verifying that an unallocated power delta, represented by a second portion of the delta schedule, $P_{remainder}^{delta}(t)$, can be distributed to the remaining technical units, TU; and

if the power represented by the second portion of the delta schedule, $P_{remainder}^{delta}(t)$, can be distributed to the remaining technical units:

designating the minimum power schedule, $P_{TU}^{desired}$, and the first portion of the delta schedule, $P_{TU}^{delta}(t)$, as a load schedule, $P_{TU}^{load}(t)$, to each technical unit, TU, and

wherein the processor is configured to generate at least one control command for controlling at least one technical unit of the set of technical units according to the corresponding load schedule, $P_{TU}^{load}(t)$, for each technical unit.

14. A system (10a, 10b) for controlling the distribution of electrical energy within a set of technical units, TU, comprising:

- an electrical energy distribution grid (12) communicably coupled to a grid controller (14);
- at least one set of technical units, TU, electrically connectable to the electrical energy distribution grid (12); and
- a first apparatus (190) for controlling the distribution of electrical energy within a set of technical units according to claim 12, wherein the first apparatus is communicably coupled to the at least one set of technical units, TU, and the grid controller (14), and/or a second apparatus (180) for obtaining an operational envelope of electrical energy provision relating to at least one set of technical units, TU, according to claim 11, wherein the second apparatus (180) is communicably coupled to the first apparatus (190) and/or the grid controller (14).

15. A computer program element comprising machine readable instructions which, when executed, cause a computer to execute either of the methods according to one of claims 1 to 4 or 5 to 11.

Fig. 1

Fig. 2

Fig. 3

Fig. 4

100

102

104

106

108

110

112

Fig. 5

Fig. 6

Aggregation:
expanded
operational
envelopes

Deaggregation:
TU control
commands

| 20 |
|----|

| OE{BG} |
|--------|

| OE{BG} |
|--------|

| $P_{agg}^{schedule}$ |
|--------|

| BG |
|----|

L3

| OE{TUA} |
|---------|
| OE{TUP,TUQ} |

| $P_{agg-TU-A,P,Q}^{schedule}$ |
|--------|

| OE{TU-P} |
|----------|
| OE{TU-Q} |
| OE{TU-A} |

| A3 | | A2 |
|----|----|----|

| COM{TUP} |
|----------|
| COM{TUQ} |
| COM{TUA} |

L2

| TU-A | | |
|------|--|--|

TU-P    TU-Q

| $P_{agg-TU-1,N,M...}^{schedule}$ |
|--------|

| OE{TU1,TUN} |
|-------------|
| OE{TUN+1, TUM} |

A1

| OE{TU-1} |
|----------|
| OE{TU-N} |
| OE{TU-N+1} |
| OE{TU-M} |

| COM{TU-1} |
|-----------|
| COM{TU-N} |
| COM{TU-N+1} |
| COM{TU-M} |

L1

TU-1    TU-N    TU-N+1    TU-M

# Fig. 7

Fig. 8

Fig. 9

Fig. 10

Fig. 11

Fig. 12

Fig. 13

Fig. 14

180

182

184

186

Fig. 15

190

192

194

196

Fig. 16

Fig. 17

Fig. 18

Europäisches
Patentamt

European
Patent Office

Office européen
des brevets

## EUROPEAN SEARCH REPORT

**Application Number**

EP 24 21 9969

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/127179 A1 (BINDING CARL [CH] ET AL) 7 May 2015 (2015-05-07)<br>* figure 6 *<br>* paragraph [0039] - paragraph [0042] *<br>----- | 1-15 | INV.<br>H02J3/28<br>H02J3/46 |
| A | LIU CONGCONG ET AL: "Robust Network-Secure Operating Envelope for Aggregators Bidding in Wholesale Market",<br>2023 INTERNATIONAL CONFERENCE ON POWER ENERGY SYSTEMS AND APPLICATIONS (ICOPESA), IEEE,<br>24 February 2023 (2023-02-24), pages 322-327, XP034355741,<br>DOI: 10.1109/ICOPESA56898.2023.10140346<br>[retrieved on 2023-06-06]<br>* page 323, paragraph B *<br>----- | 1-15 | |
| A | LIU MICHAEL Z ET AL: "Using OPF-Based Operating Envelopes to Facilitate Residential DER Services",<br>IEEE TRANSACTIONS ON SMART GRID, IEEE, USA,<br>vol. 13, no. 6, 5 July 2022 (2022-07-05), pages 4494-4504, XP011924866,<br>ISSN: 1949-3053, DOI: 10.1109/TSG.2022.3188927<br>[retrieved on 2022-07-06]<br>* figures 1,3 *<br>----- | 1-15 | |
| | | | **TECHNICAL FIELDS SEARCHED (IPC)**<br><br>H02J |
| A | SHARIQ RIAZ ET AL: "Modelling and Characterisation of Flexibilityfrom Distributed Energy Resources",<br>ARXIV.ORG, CORNELL UNIVERSITY LIBRARY, 201 OLIN LIBRARY CORNELL UNIVERSITY ITHACA, NY 14853,<br>11 July 2021 (2021-07-11), XP091010808,<br>* figure 14 *<br>* page 10, paragraph V *<br>-----<br>-/-- | 1-15 | |

The present search report has been drawn up for all claims

| Place of search | Date of completion of the search | Examiner |
|---|---|---|
| Munich | 7 May 2025 | Despis, Enguerran |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 21 9969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 795 875 A (UNIV SHANDONG) 14 March 2023 (2023-03-14) * figure 2 * ----- | 1-15 | |

TECHNICAL FIELDS SEARCHED (IPC)

The present search report has been drawn up for all claims

| Place of search | Date of completion of the search | Examiner |
|---|---|---|
| Munich | 7 May 2025 | Despis, Enguerran |

EPO FORM 1503 03.82 (P04C01)

## ANNEX TO THE EUROPEAN SEARCH REPORT
## ON EUROPEAN PATENT APPLICATION NO.

EP 24 21 9969

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | Publication date | Patent family member(s) | Publication date |
|---|---|---|---|
| US 2015127179 A1 | 07-05-2015 | US 2015127179 A1 <br> WO 2013093794 A2 | 07-05-2015 <br> 27-06-2013 |
| CN 115795875 A | 14-03-2023 | NONE | |

EPO FORM P0459

For more details about this annex : see Official Journal of the European Patent Office, No. 12/82